(19) Europäisches Patentamt / European Patent Office / Office européen des brevets

(11) **EP 2 850 796 B1**

(12) **EUROPEAN PATENT SPECIFICATION**

(45) Date of publication and mention
of the grant of the patent:
**21.10.2020  Bulletin 2020/43**

(51) Int Cl.:
*H04B 7/024* (2017.01)      *H04B 7/0452* (2017.01)
*H04B 7/06* (2006.01)       *H04W 52/34* (2009.01)
*H04W 52/42* (2009.01)

(21) Application number: **13790935.4**

(22) Date of filing: **17.05.2013**

(86) International application number:
**PCT/US2013/041726**

(87) International publication number:
**WO 2013/173809 (21.11.2013 Gazette 2013/47)**

(54) **SYSTEMS AND METHODS TO ENHANCE SPATIAL DIVERSITY IN DISTRIBUTED INPUT DISTRIBUTED OUTPUT WIRELESS SYSTEMS**

SYSTEME UND VERFAHREN ZUR ERHÖHUNG DER RÄUMLICHEN DIVERSITÄT IN DRAHTLOSEN SYSTEMEN MIT VERTEILTEN EIN- UND AUSGÄNGEN

SYSTÈMES ET PROCÉDÉS POUR AMÉLIORER UNE DIVERSITÉ SPATIALE DANS DES SYSTÈMES SANS FIL À ENTRÉES DISTRIBUÉES SORTIES DISTRIBUÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2012  US 201213475598**

(43) Date of publication of application:
**25.03.2015  Bulletin 2015/13**

(73) Proprietor: **Rearden, LLC**
**San Francisco, CA 94107 (US)**

(72) Inventors:
• **FORENZA, Antonio**
**San Francisco, California 94107 (US)**
• **PITMAN, Timothy A.**
**San Francisco, California 94107 (US)**
• **JIRASUTAYASUNTORN, Benyavut**
**San Francisco, California 94107 (US)**
• **ANDRZEJEWSKI, Robert J.**
**San Francisco, California 94107 (US)**
• **PERLMAN, Stephen G.**
**San Francisco, California 94107 (US)**

(74) Representative: **WP Thompson**
**8th Floor**
**1 Mann Island**
**Liverpool L3 1BP (GB)**

(56) References cited:
**US-A1- 2009 318 183      US-A1- 2011 003 608
US-A1- 2011 003 608      US-B2- 7 756 222**

**Description**

RELATED APPLICATIONS

This application relates to the following U.S.

Patent Applications and issued patents:

U.S. Application Serial No. 13/464,648, entitled "System and Methods to Compensate for Doppler Effects in Distributed-Input Distributed Output Systems"; U.S. Application Serial No. 12/917,257, entitled "Systems And Methods To Coordinate Transmissions In Distributed Wireless Systems Via User Clustering"; U.S. Application Serial No. 12/802,988, entitled "Interference Management, Handoff, Power Control And Link Adaptation In Distributed-Input Distributed-Output (DIDO) Communication Systems"; U.S. Patent No. 8,170,081, issued May 1, 2012, entitled "System And Method For Adjusting DIDO Interference Cancellation Based On Signal Strength Measurements"; U.S. Application Serial No. 12/802,974, entitled "System And Method For Managing Inter-Cluster Handoff Of Clients Which Traverse Multiple DIDO Clusters"; U.S. Application Serial No. 12/802,989, entitled "System And Method For Managing Handoff Of A Client Between Different Distributed-Input-Distributed-Output (DIDO) Networks Based On Detected Velocity Of The Client"; U.S. Application Serial No. 12/802,958, entitled "System And Method For Power Control And Antenna Grouping In A Distributed-Input-Distributed-Output (DIDO) Network"; U.S. Application Serial No. 12/802,975, entitled "System And Method For Link adaptation In DIDO Multicarrier Systems"; U.S. Application Serial No. 12/802,938, entitled "System And Method For DIDO Precoding Interpolation In Multicarrier Systems"; U.S. Application Serial No. 12/630,627, entitled "System and Method For Distributed Antenna Wireless Communications"; U.S. Patent No. 7,599,420, issued Oct. 6, 2009, entitled "System and Method for Distributed Input Distributed Output Wireless Communication"; U.S. Patent No. 7,633,994, issued Dec. 15, 2009, entitled "System and Method for Distributed Input Distributed Output Wireless Communication"; U.S. Patent No. 7,636,381, issued Dec. 22, 2009, entitled "System and Method for Distributed Input Distributed Output Wireless Communication"; U.S. Patent No. 8,160,121, issued Apr. 17, 2012, entitled, "System and Method For Distributed Input-Distributed Output Wireless Communications"; U.S. Application Serial No. 11/256,478, entitled "System and Method For Spatial-Multiplexed Tropospheric Scatter Communications", now U.S. Issued Patent No. 7,711,030, Issued on May 4, 2010; U.S. Patent No. 7,418,053, issued August 26, 2008, entitled "System and Method for Distributed Input Distributed Output Wireless Communication"; U.S. Application Serial No. 10/817,731, entitled "System and Method For Enhancing Near Vertical Incidence Skywave ("NVIS") Communication Using Space-Time Coding" now U.S. Issued Patent 7,885,354, Issued on February 8, 2011.

BACKGROUND

Prior art multi-user wireless systems add complexity and introduce limitations to wireless networks which result in a situation where a given user's experience (e.g. available bandwidth, latency, predictability, reliability) is impacted by the utilization of the spectrum by other users in the area. Given the increasing demands for aggregate bandwidth within wireless spectrum shared by multiple users, and the increasing growth of applications that can rely upon multi-user wireless network reliability, predictability and low latency for a given user, it is apparent that prior art multi-user wireless technology suffers from many limitations. Indeed, with the limited availability of spectrum suitable for particular types of wireless communications (e.g. at wavelengths that are efficient in penetrating building walls), prior art wireless techniques will be insufficient to meet the increasing demands for bandwidth that is reliable, predictable and low-latency.
Prior art document US 2011/003608 A1 discloses methods for adjusting communications in Distributed-Input-Distributed-Output (DIDO) systems.

BRIEF DESCRIPTION OF THE DRAWINGS

A better understanding of the present invention can be obtained from the following detailed description in conjunction with the drawings, in which:

FIG. 1 illustrates one embodiment of a multi-user (MU) multiple antenna system (MAS), or MU-MAS, consisting of a precoding transformation unit.
FIG. 2 illustrates one embodiment in which base transceiver stations (BTSs) are directly connected to a centralized processor (CP).
FIG. 3 illustrates an embodiment in which base transceiver stations (BTSs) are connected via a base station network.
FIG. 4 illustrates another embodiment in which base transceiver stations (BTSs) are connected via a network.
FIG. 5 illustrates simulated transmit covariance matrices for DIDO 6x6 systems with three models.

**FIG. 6** illustrates the cumulative density function (CDF) of the diversity metric as well as the symbol error rate (SER) performance as a function of the signal-to-noise ratio (SNR) for three channel models.

**FIG. 7** illustrates an exemplary distribution of base transceiver stations.

**FIG. 8** illustrates space selectivity indicator (SSI) as a function of the maximum auto-correlation and cross-correlation coefficients of the spatial covariance matrix.

**FIG. 9** illustrates exemplary SSI results for three channel models.

**FIG. 10** illustrates a comparison of the cumulative density function (CDF) of the SSI in the three scenarios above.

**FIG. 11** illustrates the SNDR of client devices in a DIDO 2x2 system for one measurement set.

**FIG. 12** illustrates combined plots containing SNDR, TSI, and SSI.

**FIG. 13** illustrates the results from a second channel scenario where RX2 moves from a location with high power imbalance to another with low power imbalance.

**FIG. 14** illustrates that even the performance of RX1 (the stationary client) improves as the SSI increases.

**FIG. 15** illustrates the SNDR versus the average SSI (a) and standard deviation of the SSI (b).

**FIG. 16** illustrates how SNDR decreases as the standard deviation of the TSI due to deep-fade in time caused by a client's mobility and Doppler effect.

**FIG 17a** illustrates the CN defined in equation (7) plotted as a function of the minimum auto-correlation coefficient and maximum cross-correlation coefficient, where every dot is the result of 100msec of data.

**FIG. 17b** illustrates the CDF of the SSI defined as the CN.

**FIG. 18** illustrates a three dimensional version of **FIG. 17a.**

**FIG. 19** illustrates the average SNDR as a function of the average CN.

**FIG. 20** illustrates the performance of different order DIDO systems in i.i.d. channels assuming same per-antenna transmit power.

**FIG. 21** illustrates the simulated performance of DIDO 4x4 in i.i.d. channels.

**FIG. 22** illustrates the gain in SNR as a function of the gain of the diversity metric in (9).

**FIG. 23** illustrates the traces of SNDR, SSI (indicated as $\lambda_{min}$) and TSI (being the absolute value of the complex channel gain from every transmitter indicated as TX1,...,M).

**FIG. 24** illustrates the results obtained over the same route as in **FIG. 23,** but using two extra antennas.

**FIGS. 25-28** show the simulated SER performance and CDF of the SSI for DIDO 4x2, 6x4, 8x6 and 10x8 systems.

**FIG. 29** illustrates the average SNDR (over periods of 5 seconds) versus the average SSI.

**FIG. 30** illustrates results for DIDO 4x4 and 6x4.

**FIG. 31** illustrates the average SNDR as a function of the standard deviation of the TSI for DIDO 2x2 and 4x2.

**FIG. 32** illustrates results for DIDO 4x4 and 6x4.

**FIG. 33** compares the CDF of the instantaneous SSI for four DIDO systems.

**FIG. 34** illustrates the results from one particular measurement set with approximately 20 seconds of data.

**FIG. 35** illustrates one embodiment where the SSI target is raised to -15dB and as a result the SER performance improves.

**FIG. 36** illustrates improvements achieved by raising the target SSI.

**FIG. 37** illustrates an exemplary scenario where multiple UEs are clustered around one BTS.

**FIG. 38** illustrates SER performance of different order DIDO systems for different values of the maximum auto-correlation coefficient.

**FIG. 39** illustrates the CDF of the SSI for different values of maximum auto-correlation.

**FIG. 40** illustrates one embodiment of a method for balancing the transmit power across all BTSs in the MU-MAS or DIDO system.

**FIG. 41** illustrates another embodiment of a method for balancing the transmit power across all BTSs in the MU-MAS or DIDO system.

**FIG. 42** illustrates the performance of the transmit power balancing methods in practical outdoor propagation scenarios.

**FIG. 43** illustrates the distribution of the condition number with and without power imbalance.

**FIGS. 44-46** illustrate the channel traces (SNDR, SSI and TSI) for three different cases: i) DIDO 2x2 without transmit power balancing method; ii) DIDO 2x2 with transmit power balancing method; iii) DIDO 4x2 with transmit power balancing method in combination with antenna selection method.

**FIG. 47** illustrates a scenario where a particular BTS is the source of transmit power imbalance.

**FIG. 48** illustrates the condition number distribution with and without imbalance.

**FIGS. 49-51** depict channel traces for different algorithms.

**FIG. 52** illustrates the SER and CDF of the SSI for DIDO systems with 4 clients.

**FIG. 53** shows the statistics of the BTSs that have been selected for transmission and their relative usage.

## DETAILED DESCRIPTION

One solution to overcome many of the above prior art limitations is an embodiment of Distributed-Input Distributed-Output (DIDO) technology. DIDO technology is described in the following patents and patent applications, all of which are assigned the assignee of the present patent. These patents and applications are sometimes referred to collectively herein as the "related patents and applications."

U.S. Application Serial No. 13/464,648, entitled "System and Methods to Compensate for Doppler Effects in Distributed-Input Distributed Output Systems."

U.S. Application Serial No. 12/917,257, entitled "Systems And Methods To Coordinate Transmissions In Distributed Wireless Systems Via User Clustering"

U.S. Application Serial No. 12/802,988, entitled "Interference Management, Handoff, Power Control And Link Adaptation In Distributed-Input Distributed-Output (DIDO) Communication Systems"

U.S. Patent No. 8,170,081, issued May 1, 2012, entitled "System And Method For Adjusting DIDO Interference Cancellation Based On Signal Strength Measurements"

U.S. Application Serial No. 12/802,974, entitled "System And Method For Managing Inter-Cluster Handoff Of Clients Which Traverse Multiple DIDO Clusters"

U.S. Application Serial No. 12/802,989, entitled "System And Method For Managing Handoff Of A Client Between Different Distributed-Input-Distributed-Output (DIDO) Networks Based On Detected Velocity Of The Client"

U.S. Application Serial No. 12/802,958, entitled "System And Method For Power Control And Antenna Grouping In A Distributed-Input-Distributed-Output (DIDO) Network"

U.S. Application Serial No. 12/802,975, entitled "System And Method For Link adaptation In DIDO Multicarrier Systems"

U.S. Application Serial No. 12/802,938, entitled "System And Method For DIDO Precoding Interpolation In Multicarrier Systems"

U.S. Application Serial No. 12/630,627, entitled "System and Method For Distributed Antenna Wireless Communications"

U.S. Patent No. 7,599,420, issued Oct. 6, 2009, entitled "System and Method for Distributed Input Distributed Output Wireless Communication";

U.S. Patent No. 7,633,994, issued Dec. 15, 2009, entitled "System and Method for Distributed Input Distributed Output Wireless Communication";

U.S. Patent No. 7,636,381, issued Dec. 22, 2009, entitled "System and Method for Distributed Input Distributed Output Wireless Communication";

U.S. Patent No. 8,160,121, issued Apr. 17, 2012, entitled, "System and Method For Distributed Input-Distributed Output Wireless Communications";

U.S. Application Serial No. 11/256,478, entitled "System and Method For Spatial-Multiplexed Tropospheric Scatter Communications";

U.S. Patent No. 7,418,053, issued August 26, 2008, entitled "System and Method for Distributed Input Distributed Output Wireless Communication";

U.S. Application Serial No. 10/817,731, entitled "System and Method For Enhancing Near Vertical Incidence Skywave ("NVIS") Communication Using Space-Time Coding."

The invention is defined by the appended independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

## 1. System Model

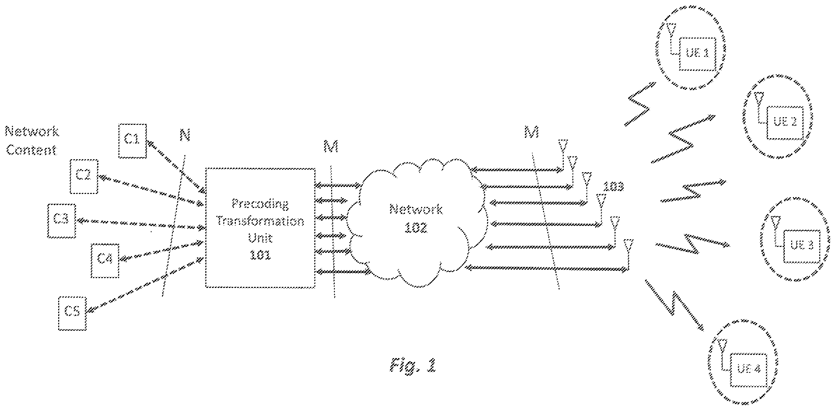

Described below is a multi-user (MU) multiple antenna system (MAS), or MU-MAS, consisting of a precoding transformation unit 101, a network 102 and M transceiver stations 103 communicating wirelessly to N client devices UE1-UE4, as depicted in **Figure 1.** The precoding transformation unit 101 receives N *streams of information* with different network contents (e.g., videos, web-pages, video games, text, voice, etc., streamed from Web servers or other network sources C1-C5) intended for different client devices. Hereafter, we use the term "stream of information" to refer to any stream of data sent over the network containing information that can be demodulated or decoded as a standalone stream, according to certain modulation/coding scheme or protocol, to produce certain voice, data or video content. In one embodiment, the stream of information is a sequence of bits carrying network content that can be demodulated or decoded as a standalone stream. In one embodiment, this network content is delivered to the precoding transformation unit 101 via a network. Any type of network access technology may be used including wireline and wireless. Additionally, the network may be a local area network (e.g., LAN, WLAN, etc.), wide area network, the Internet, or any combination thereof.

In one embodiment, the precoding transformation unit 101 processes the channel state information (CSI) for each communication channel established with each client device UE1-UE4 to produce a precoding transformation. In another embodiment, channel quality information (e.g., signal-to-noise ratio, etc) or statistical channel information (e.g., spatial covariance matrix, etc.) are used to compute the precoding transformation. The precoding transformation can be linear (e.g., zero-forcing [1], block-diagonalization [2], matrix inversion, etc.) or non-linear (e.g., dirty-paper coding [3-5] or Tomlinson-Harashima precoding [6-7]).

In one embodiment, the precoding transformation unit 101 utilizes the precoding transformation to combine (according to certain algorithm) the N streams of information from the network content C1-C5 into M *streams of bits.* Hereafter, we use the term "stream of bits" to refer to any sequence of bits that does not necessarily contain any useful bit of information and as such cannot be demodulated or decoded as a standalone stream to retrieve the network content. In one embodiment of the invention, the stream of bits is the complex baseband signal produced by the precoding transformation unit and quantized over given number of bits to be sent to one of the M transceiver stations 103. In one embodiment, the M streams of bits are sent from the precoding transformation unit to the M transceiver stations 103 via the network 102 (which may be a wireline/wireless, Internet, wide area network, or local area network, or any combination thereof).

Finally, the M transceiver stations 103 send the streams of bits to the client devices UE1-UE4 that recover the streams of information and demodulate the network content. Note that the number of clients K in the system can be any value. For example, if K>M the extra (K-M) clients are multiplexed via different techniques described in the related patents and applications and in the prior art (e.g., TDMA, FDMA, OFDM, CDMA, etc.). Also, if K <= M but K < N, more than one stream of information is available for some of the client devices. Those client devices can demodulate multiple streams of information if they are equipped with multiple antennas by using existing MIMO or DIDO techniques.

One important feature of the present invention is that the MU-MAS transforms the streams of information into streams of bits sent over the network to the transceiver stations 103, such that the client devices UE1-UE4 can recover the stream of information when receiving the streams of bits simultaneously from all transceiver stations. We observe that, unlike prior art, the M streams of bits sent through the network are combinations of some or all N streams of information. As such, if a client device had to receive the stream of bits from only one of the M transceiver stations (even assuming good link quality and SNR from that station to the client), that information would be completely useless and it would be impossible to recover the original network content. It is only by receiving the streams of bits from all or a subset of the M transceiver stations that every client device can recover the streams of information and demodulate the network contents C1-C5.

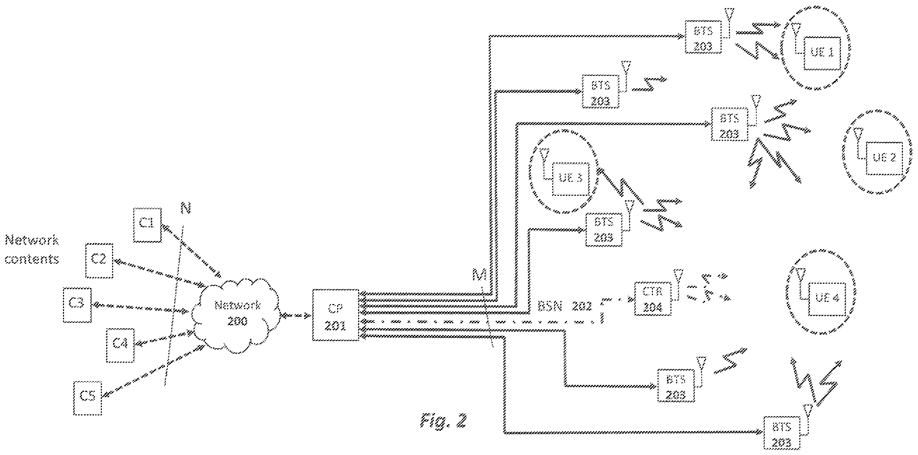

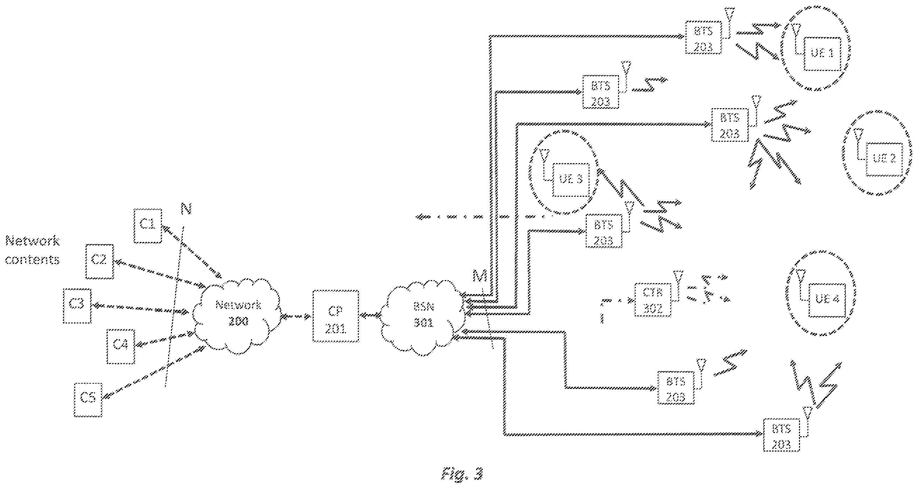

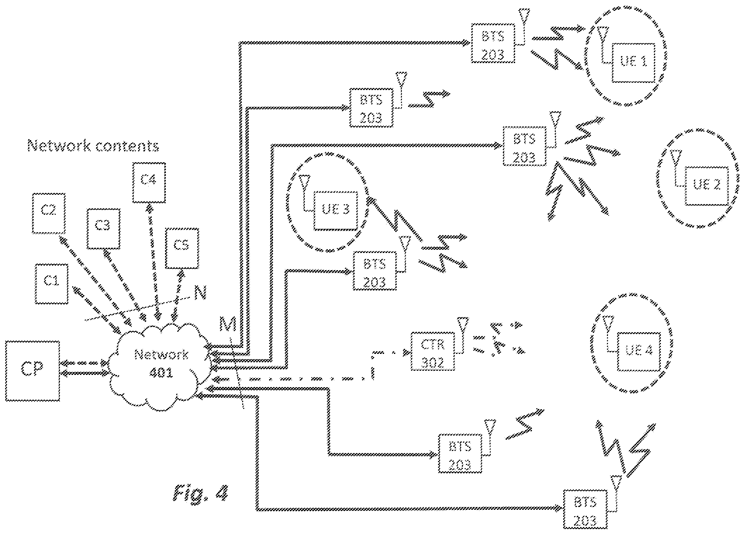

In one embodiment of the invention, the MU-MAS is a distributed-input distributed-output (DIDO) system consisting of a centralized processor (CP) 201, base transceiver stations (BTSs) 203, and user equipment (UEs) UE1-UE4 as shown in **Figure 2** and described in the related patents and applications referenced above. The BTSs can either be directly connected to the CP 201 as in **Figure 2** or via the base station network (BSN) 301 as depicted in **Figure 3.** In another embodiment, the network contents C1-C5 and the BTSs 203 are both connected to the CP 201 via the same network 401 as in **Figure 4,** which may be a wireline/wireless local area network, wide area network, and/or the Internet.

For client devices to reliably recover the network content from the received streams of information, the wireless channel must have a sufficient number of degrees of freedom or equivalently must have high spatial diversity. Spatial diversity depends on the distribution in space of the transceiver stations 203 and the client devices UE1-UE4 as well as the spatial distribution of multi-paths in the propagation environment (or channel angular spread). Described below are different metrics to evaluate the spatial diversity of the wireless channel that will be used in the techniques and methods described later on in the present application.

## 2. Diversity Metrics and Channel Models

The received signal at target client k is given by

$$\mathbf{r}_k = \mathbf{H}_k \mathbf{W}_k \mathbf{s}_k + \mathbf{H}_k \sum_{\substack{u=1 \\ u \neq k}}^{K} \mathbf{W}_u \mathbf{s}_u + \mathbf{n}_k \tag{1}$$

where $k=1,...,K$, with K being the number of clients. Moreover, $\mathbf{r}_k \in C^{R \times M}$ is the vector containing the receive data streams at client k, assuming M transmit DIDO antennas and $R$ receive antennas at the client devices; $\mathbf{s}_k \in C^{N \times 1}$ is the vector of transmit data streams to client $k$ in the main DIDO cluster; $\mathbf{s}_u \in C^{N \times 1}$ is the vector of transmit data streams to client

$u$ in the main DIDO cluster; $\mathbf{n}_k \in C^{N \times 1}$ is the vector of additive white Gaussian noise (AWGN) at the $R$ receive antennas of client $k$; $\mathbf{H}_k \in C^{R \times M}$ is the DIDO channel matrix from the $M$ transmit DIDO antennas to the $R$ receive antennas at client $k$; $\mathbf{W}_k \in C^{M \times R}$ is the matrix of DIDO precoding weights to client $k$ in the main DIDO cluster; $\mathbf{W}_u \in C^{M \times R}$ is the matrix of DIDO precoding weights to client $u$ in the main DIDO cluster.

To simplify the notation without loss of generality, we assume all clients are equipped with $R$ receive antennas and that there are $M$ DIDO distributed antennas with $M \geq (R \cdot K)$. If M is larger than the total number of receive antennas, the extra transmit antennas are used to pre-cancel interference to the target clients or to improve link robustness to the clients within the same cluster via diversity schemes described in the related patents and applications, including 7,599,420; 7,633,994; 7,636,381; and Application Serial No. 12/143,503.

The DIDO precoding weights are computed to pre-cancel inter-client interference. For example, block diagonalization (BD) precoding described in the related patents and applications, including 7,599,420; 7,633,994; 7,636,381; and Application Serial No. 12/143,503 and [2] can be used to remove inter-client interference, such that the following condition is satisfied in the main cluster

$$\mathbf{H}_k \mathbf{W}_u = \mathbf{0}^{R \times R}; \qquad \forall\, u = 1, \dots, K;\ \text{with } u \neq k. \tag{2}$$

Substituting conditions (2) into (1), we obtain the received data streams for target client $k$, where inter-user interference is removed

$$\mathbf{r}_k = \mathbf{H}_k \mathbf{W}_k \mathbf{s}_k + \mathbf{n}_k. \tag{3}$$

We define the *effective channel matrix* of user k as

$$\widetilde{\mathbf{H}}_k = \mathbf{H}_k \mathbf{W}_k. \tag{4}$$

One embodiment of the invention defines the diversity metric as the minimum over all clients of the minimum singular values of the effective channel matrices in (4)

$$\lambda_{\min} = \min_{k=1,\dots,K} \lambda_{\min}^{(k)} \left( \widetilde{\mathbf{H}}_k \right). \tag{5}$$

Another embodiment uses the minimum or maximum singular value or the condition number of the composite DIDO channel matrix obtained by staking the channel matrices from every client as

$$\overline{\mathbf{H}} = \begin{bmatrix} \mathbf{H}_1 \\ \vdots \\ \mathbf{H}_K \end{bmatrix}. \tag{6}$$

The condition number (CN) is defined as the ratio between the maximum and the minimum singular value of the composite DIDO channel matrix as

$$\mathrm{CN} = \frac{\lambda_{\max}(\overline{\mathbf{H}})}{\lambda_{\min}(\overline{\mathbf{H}})}. \tag{7}$$

Next, we define different channel models that will be used to simulate the performance of the system and methods described in this application in realistic propagation conditions. We employ the well known Kronecker structure [8,9] and model the spatial covariance matrix with cross-correlation entries $r_{i,j} = p_c^{|i-j|}$ with $i \neq j$, and auto-correlation entries given by

$$r_{i,i} = \begin{cases} \rho_a & i = 1 \\ \dfrac{(N - \rho_a)(N - i + 1)}{\displaystyle\sum_{n=1}^{N-1} n} & i > 1 \end{cases}. \qquad (8)$$

The advantage of the model in (8) is that it allows us to write the diagonal entries of the spatial covariance matrix as a function of only one parameter $\rho_a$.

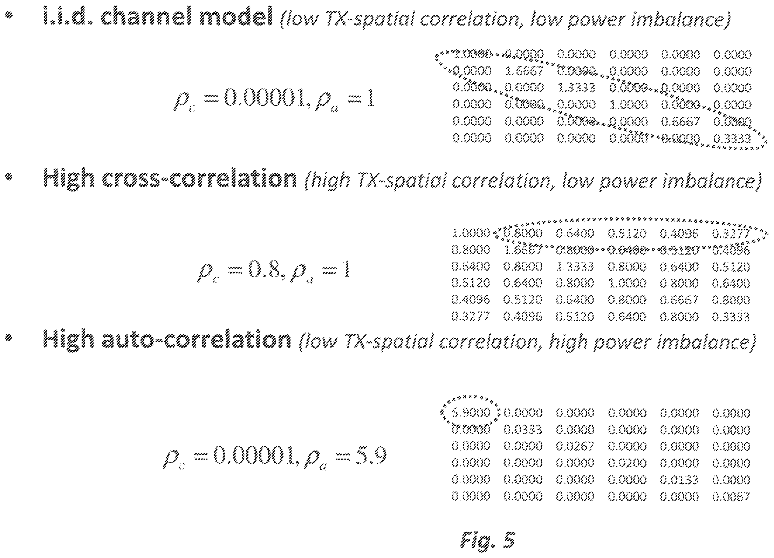

We define three different channel models for the transmit spatial covariance matrix: i) "i.i.d. model" with $\rho_c$ = 0.00001, $\rho_a$ = 1 that approximates the independent identically distributed models; ii) "high cross-correlation model" with $\rho_c$ = 0.8, $\rho_a$ =1 to simulate wireless systems where the antennas have equal transmit power and are in close proximity to each other (e.g., corner case in MIMO systems) thereby yielding high cross-correlation coefficients; iii) "high auto-correlation model" with $\rho_c$ = 0.00001, $\rho_a$ = 5.9 to simulate wireless systems with antennas distributed over a large area to yield low spatial correlation, but with one antenna overpowering all the others due to its close proximity to all clients (e.g., corner case in DIDO systems). Simulated transmit covariance matrices for DIDO 6x6 systems with these three models are shown in **Figure 5.** In all the results presented hereafter, we assume the receive covariance matrix is identity, since the clients are assumed to be spread over large area, several wavelengths apart from one another.

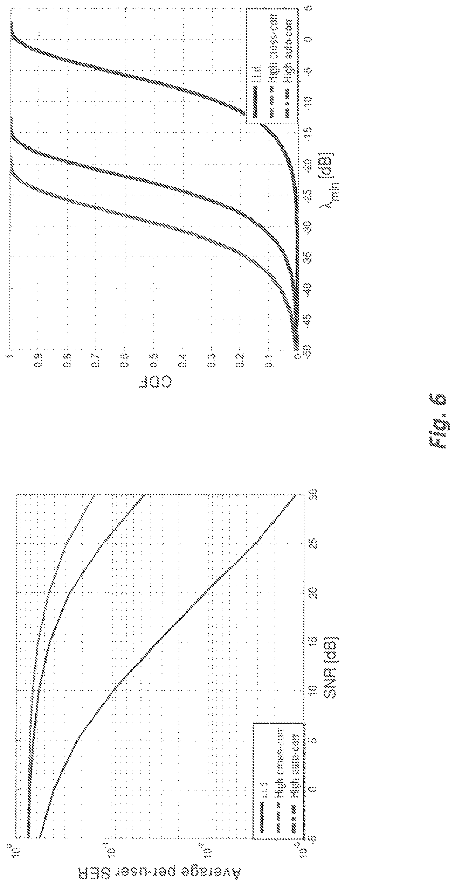

**Figure 6** shows the cumulative density function (CDF) of the diversity metric (i.e., minimum singular value) as well as the symbol error rate (SER) performance as a function of the signal-to-noise ratio (SNR) for the three channel models described above. We observe the SER performance in the "high cross-correlation model" and "high auto-correlation model" degrades due to lack of spatial diversity. In the "high cross-correlation model", lack of diversity is due to high spatial correlation across the transmit antennas of the MIMO array. In the "high auto-correlation model", reduced diversity is due to transmit power imbalance on one of the transmit antennas over the others. One way to improve spatial diversity in the "high cross-correlation model" is to space antennas far apart, which can be prohibitive in practical MIMO systems. In the "high auto-correlation model" diversity can be increased by balancing transmit power across the distributed antennas as described later in this patent application.

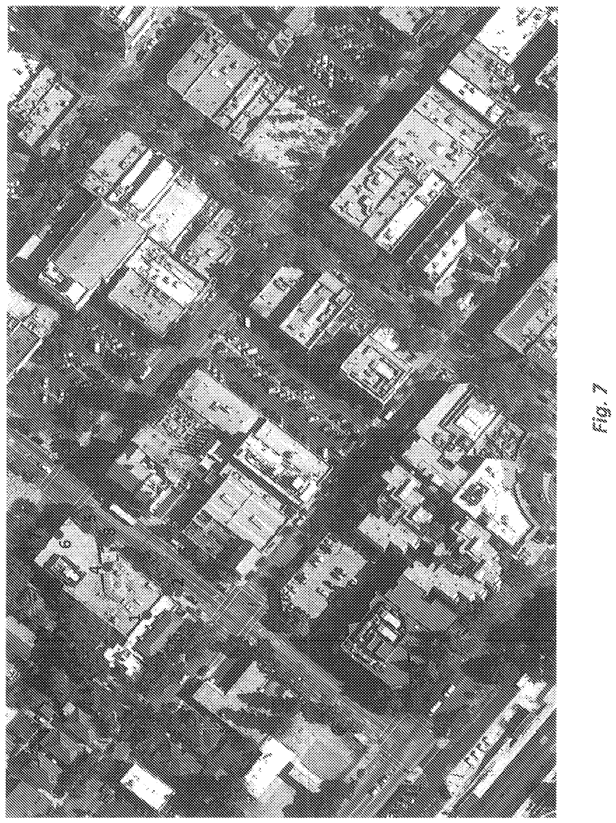

We collected the diversity metric in DIDO systems for a variety of propagation conditions. In the experimental campaign, we used the DIDO BTSs installed in different buildings in downtown Palo Alto, as shown in **Figure 7.** We began by measuring the "space selectivity indicator" (SSI) in (5) for DIDO 2x2 systems in a variety of propagation scenarios and with different combinations of transmit BTSs and receive antenna locations around downtown Palo Alto.

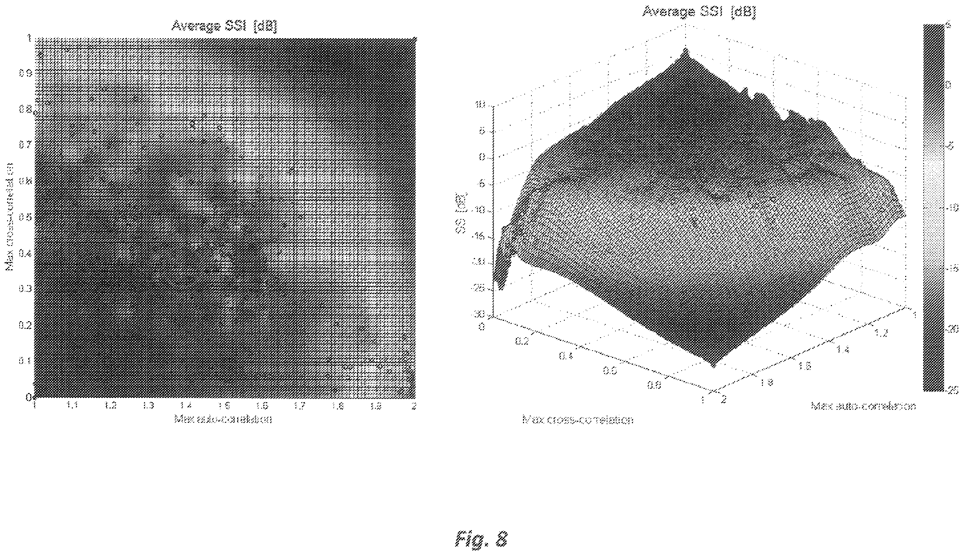

**Figure 8** shows the SSI as a function of the maximum auto-correlation and cross-correlation coefficients of the spatial covariance matrix. Each dot is obtained by averaging the spatial covariance matrix over a period of 5 seconds, which is enough to average out the fading effect at the speed considered in the experiments (i.e., stationary clients as well as clients moving at 3mph). We observe the highest values of SSI (that indicate high channel spatial selectivity) are obtained when the maximum cross-correlation is "0" (i.e., low spatial correlation between transmit antennas, due to large physical spacing between antennas or high channel angular spread) and the maximum auto-correlation is "1" (i.e., good power balance across transmit antennas). Any scenario that deviates from these two cases yields low values of SSI and low spatial diversity.

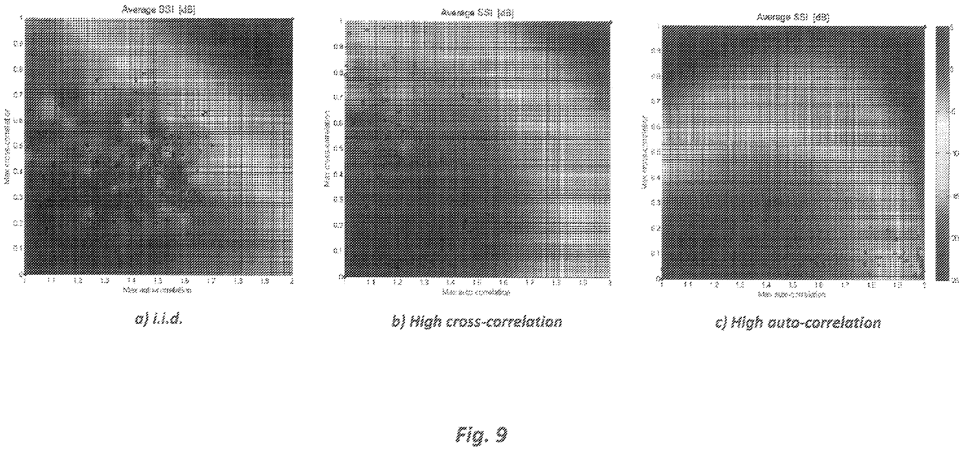

**Figure 9** shows the SSI results for the three channel models described above. The "i.i.d." case in **Figure 9a** indicates scenarios where the DIDO BTSs were physically faraway from one another; the "high cross-correlation" case was obtained by spacing the transmit antennas one wavelength apart while allowing the clients to move around anywhere in the coverage area; the "high auto-correlation" case was obtained by placing all clients in proximity of antenna 10 in **Figure 7,** such that it would overpower the other transmitter. The pink circle in every plot indicates the average of the auto- and cross-correlation coefficients. In **Figure 9b** the average cross-correlation increases from **Figure 9a** due to small antenna spacing and the average auto-correlation decreases due to transmit power balance. Vice versa, in **Figure 9c** the average auto-correlation increases due to transmit power imbalance and the average cross-correlation decreases due to larger antennas spacing between BTSs.

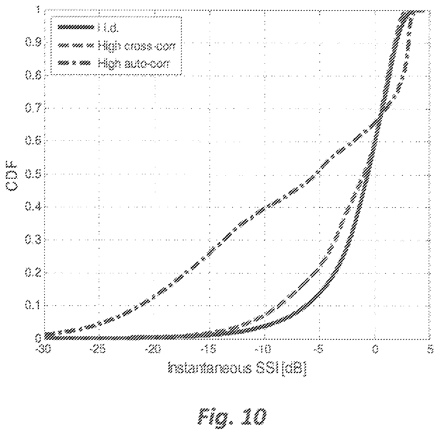

**Figure 10** compares the cumulative density function (CDF) of the SSI in the three scenarios above. We observe that the i.i.d. case yields the best performance over the other two channel conditions.

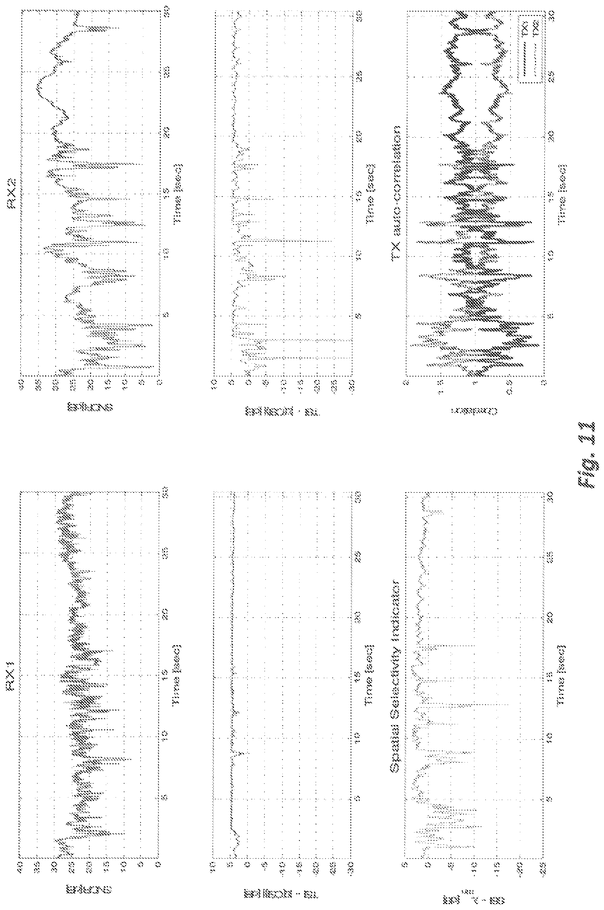

Next, we analyze how the signal-to-noise-plus-distortion ratio (SNDR) and SER performance of DIDO systems varies as a function of spatial and temporal variations. The spatial variations are measured via the above defined SSI. The temporal variations are measured through the "time selectivity indicator" (TSI). One embodiment of the inventions defines the TSI as the absolute value of the sum of the complex channel gain from some or all transmit antennas in the DIDO system. Any other metric tracking channel variations, deep-fade rate or duration can be used as TSI. The top row in **Figure 11** shows the SNDR of both client devices in the DIDO 2x2 system for one measurement set. The second row depicts the TSI: we observe the TSI of client 1 is flat because it is stationary, whereas the TSI of client 2 fades over time due to client's mobility. The third row shows the SSI as well as the auto-correlation coefficients for each of the two transmitters. We observe that when the two auto-correlation coefficients are close to "1", the SSI increases.

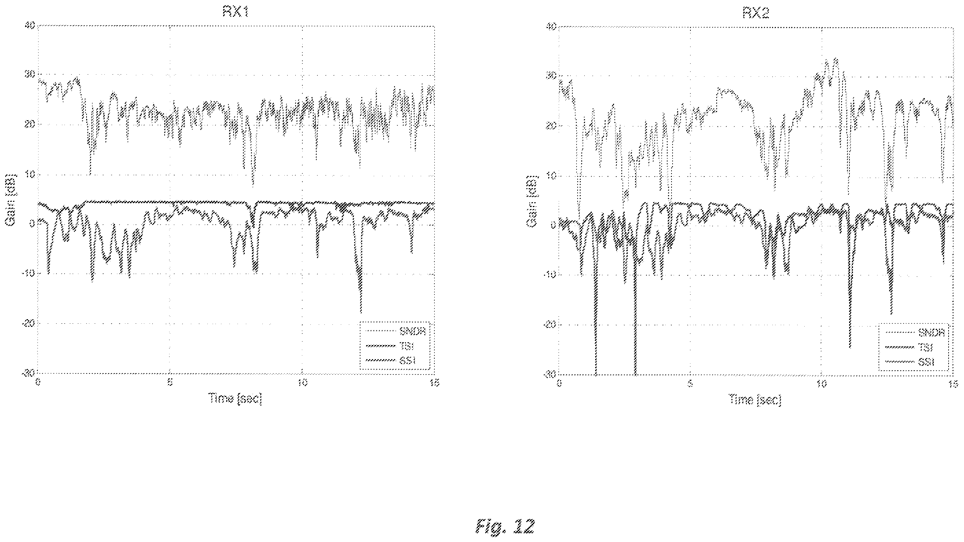

**Figure 12** combines the above results all on one plot. For the first receiver (i.e., RX1) we observe the SNDR trace fades even though the client is stationary and the TSI is flat. In fact, due to the mobility of RX2, the SSI varies over time and those variations produce SNDR fades also for RX1. Moreover, we observe that the SSI may fade independently on the TSI. In fact TSI fades indicate poor signal quality from both transmitters due to destructive interference of multipaths, but the DIDO channel may still have enough spatial degrees of freedom (i.e., large SSI) to support multiple spatial data streams. Alternatively, SSI fades indicate the DIDO channel matrix is singular and cannot support multiple parallel data streams, but the signal quality from all transmit antennas may still be good, yielding large TSI. The present invention uses TSI, SSI, or a combination of the two metrics to evaluate the channel diversity and adjust system parameters to enhance diversity.

The SSI can be used to measure and predict the areas of coherence in DIDO systems. For example, one embodiment of the invention measures the SSI, keeps track of it over time, and predicts its future behavior. Based on that prediction, it adapts both transmit and receive system parameters (e.g., number of BTSs to employ for transmission or number of client devices to receive data streams).

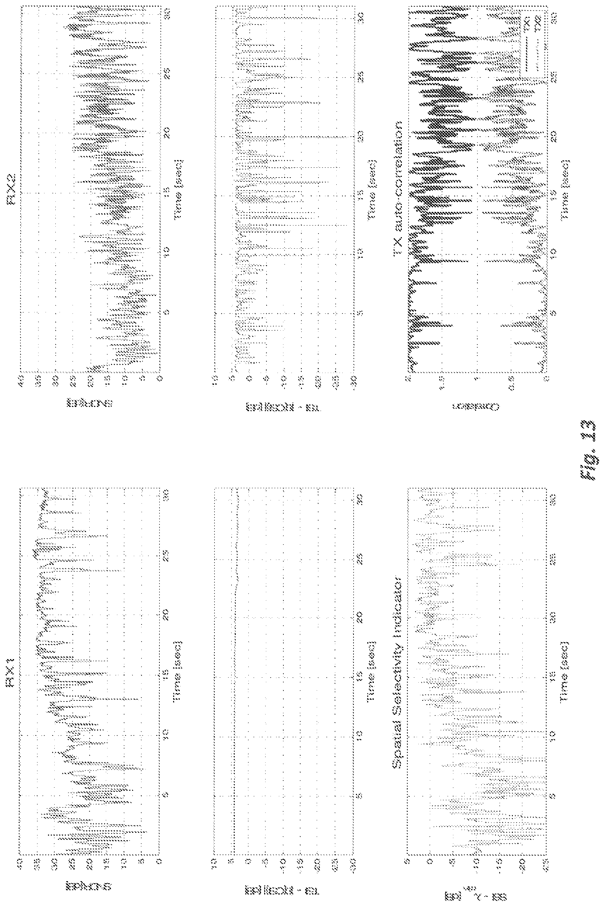

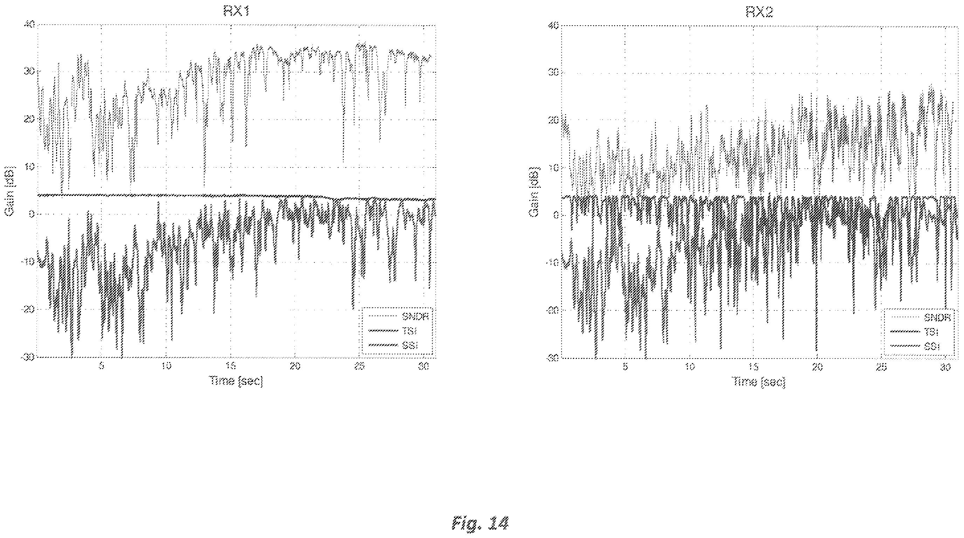

**Figure 13** shows the results from a second channel scenario where RX2 moves from a location with high power imbalance to another with low power imbalance. The result of this variation is SSI improvement. **Figure 14** shows the summary for the same measurement scenario: we observe even the performance of RX1 (the stationary client) improves as the SSI increases.

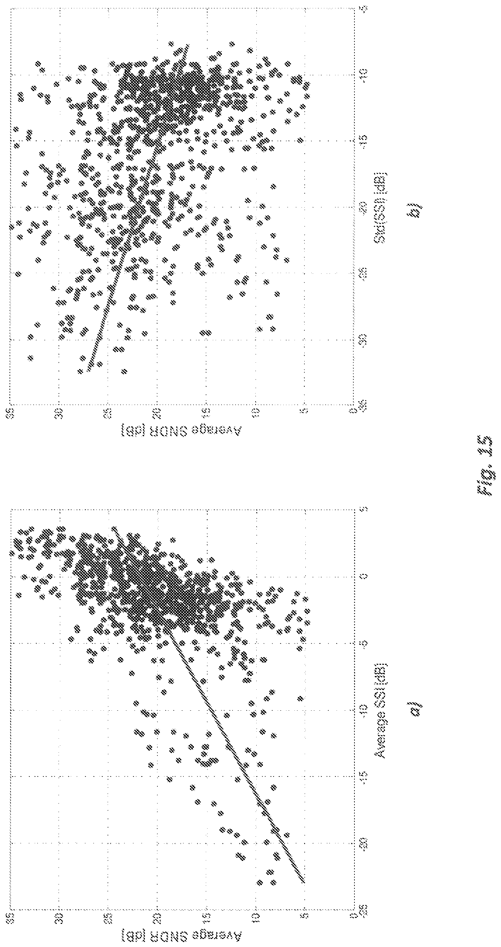

We compared the SNDR performance against the SSI in a large set of propagation conditions. **Figure 15** depicts the SNDR versus the average SSI in a) and standard deviation of the SSI in b). Each dot represents one measurement collected over a period of 5 seconds. The red solid line represents the linear regression of all measurement points, where the upper and lower 10% of the measurements has been removed from the regression calculation. We observe the average SNDR increases as a function of the average SSI in **Figure 15a** due to large spatial diversity available in the wireless channel. For example, scenarios characterized by large power imbalance yield low average SSI resulting in low SNDR. Moreover, in **Figure 15b** the average SNDR decreases as a function of the standard deviation of the SSI due to frequent deep-fades of the SSI due to client mobility. Note that in practical systems the average and standard deviation of the SSI can be computed via running average techniques or methods using forgetting factor for efficient memory use and reduction in computational complexity.

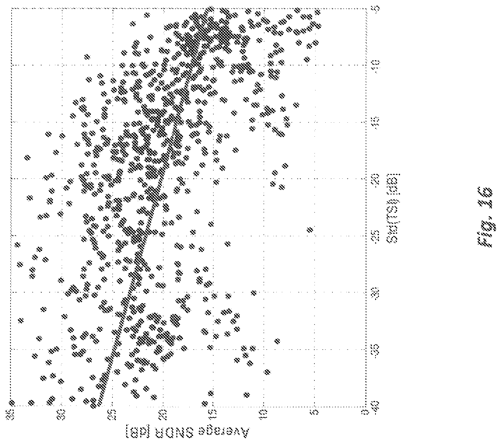

**Figure 16** shows similar results for the temporal channel variations. The SNDR decreases as the standard deviation of the TSI due to deep-fade in time caused by the client's mobility and Doppler effect.

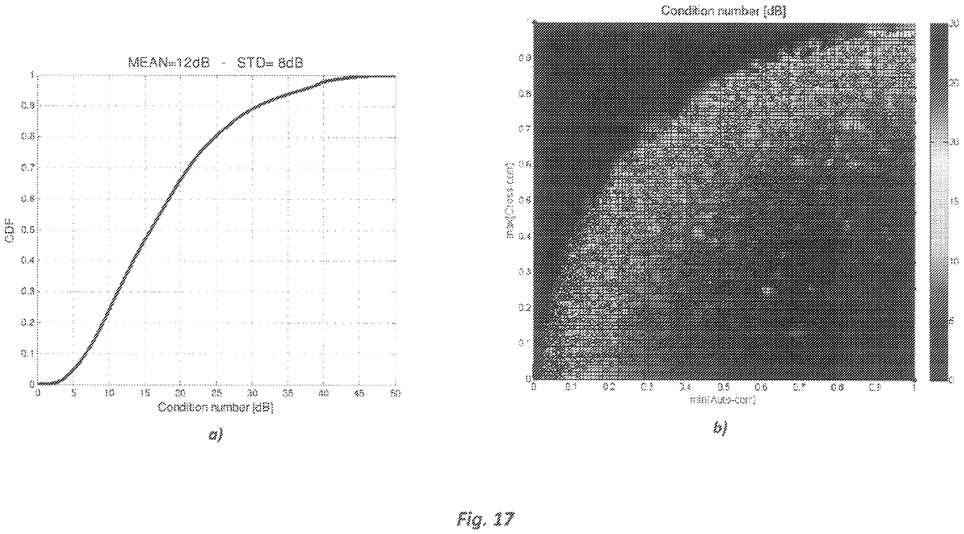

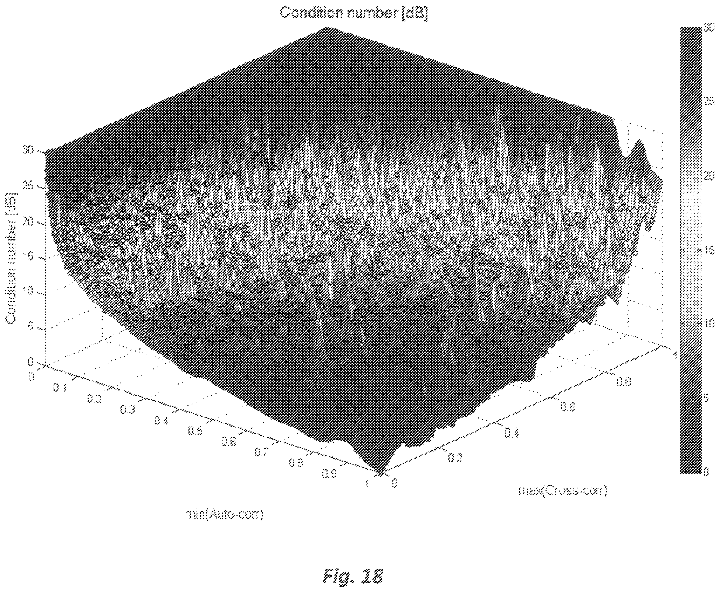

Another embodiment of the invention uses the condition number (CN) as SSI. The CN defined in equation (7) is plotted as a function of the minimum auto-correlation coefficient and maximum cross-correlation coefficient in **Figure 17b,** where every dot is the result of 100msec of data. Contrarily to the minimum singular value of the effective channel matrix, lower CN indicates channels with high spatial diversity. **Figure 17a** shows the CDF of the SSI defined as the CN. **Figure 18** depicts the three dimensional version of **Figure 17a.**

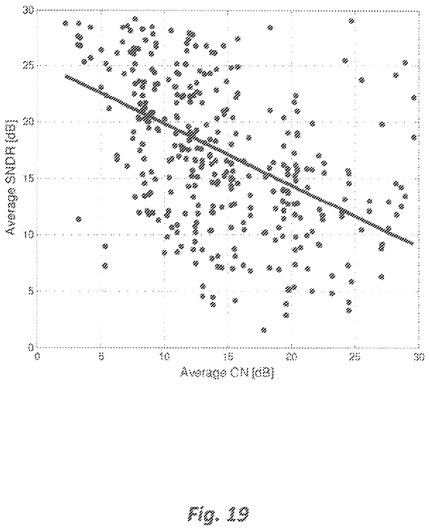

**Figure 19** shows the average SNDR as a function of the average CN. Every dot represents an average over 20 seconds of data. We observe that the SNDR degrades as the value of the average CN increases.

### 3. Methods for Transmit Antenna Selection

One way to increase the spatial degrees of freedom in a wireless link is to add more transmit antennas than the number of clients in the system and select among the antennas that satisfy a certain SSI performance target. This algorithm is known as transmit antenna selection as described in [10] and our previous patent application US 7,636,381. In one embodiment, all possible combination of transmit antenna subsets are first identified. Then the SSI is computed for each of the antenna sets. Finally the set that maximizes the diversity metric or SSI is chosen as optimal transmit antenna subset.

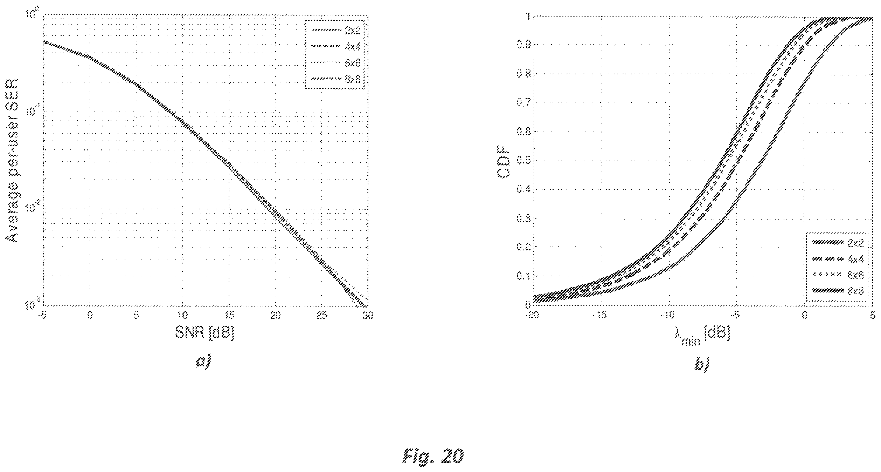

**Figure 20** shows the performance of different order DIDO systems in i.i.d. channels assuming same per-antenna transmit power. The SSI degrades for increasing number of transmit antennas as the CDF shifts to the left going from 2x2 to 8x8, but the SER performance is similar for any order DIDO.

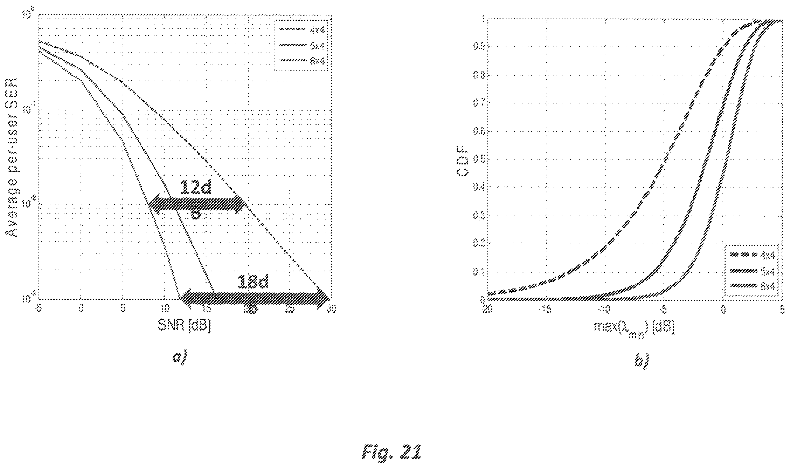

**Figure 21** shows the simulated performance of DIDO 4x4 in i.i.d. channels. Antenna selection provides significant gains in SNR depending on the target SER. For example, at SER target of 1% by adding two extra antennas the gain is 12dB or at a target of 0.1% that gain increases up to 18dB. Also, **Figure 21b** shows that the CDF of the SSI improves with antenna selection due to enhanced spatial diversity. Note that in Figure 21 we plot the maximum (over all possible transmit antenna subsets) of the minimum singular value of the effective channel matrix. We define the mean value of the CDF in Figure 21b in decibels as

$$D_{dB} = 20 \log_{10}(E\{\max \ (\lambda_{min})\}) \qquad\qquad (9)$$

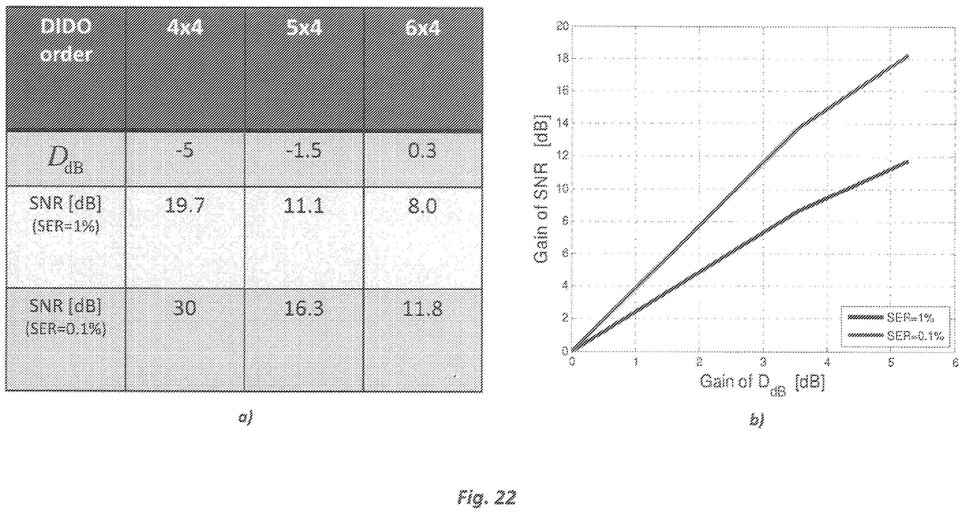

**Figure 22** shows the gain in SNR as a function of the gain of the diversity metric in (9). The values in the table a) are obtained from the simulated SER performance in **Figure 21a**. In **Figure 22b** we observe close to linear relation between the two gains. In one embodiment of the invention, the average SSI is used to decide whether to employ the selection algorithm or not. In fact, antenna selection algorithms require additional computational complexity as the SSI must be computed over all antenna subsets. Understanding under what channel conditions the antenna selection algorithm is really needed, allows to turn off the algorithm when unnecessary, thereby improving computational complexity of the system. For example, if the average SSI is above a certain threshold, there is no need to trigger the antenna selection algorithm and a fixed number of antennas are used for transmission. If the average SSI decreases (e.g., due to client's mobility) the algorithm will trigger the antenna selection algorithm in such a way that the best antenna subset is chosen for transmission over the wireless link.

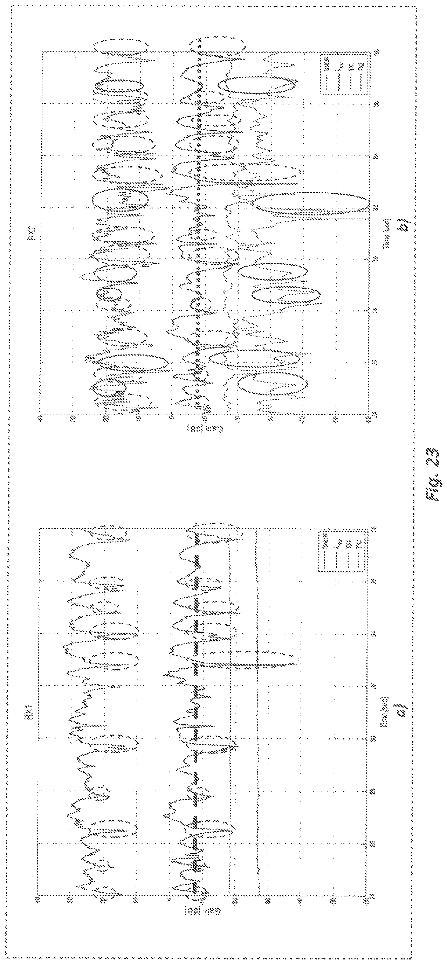

The SSI threshold can be pre-calculated by analyzing experimental data from practical measurements. For example, **Figure 23** shows the traces of SNDR, SSI (indicated as $\lambda_{min}$) and TSI (being the absolute value of the complex channel gain from every transmitter indicated as TX1,...,M). Note that we intentionally subtracted 20dB from the TSI traces to fit all traces into the same plot while avoiding overlaps. In this experiment, the first client RX1 is stationary, whereas the second RX2 is mobile. We observe that even for the stationary client the SNDR trace varies over time due to fades in the SSI trace. In particular, every time the SSI falls below -10dB, the SNDR undergoes deep-fades. We choose -10dB as a threshold for the SSI. This invention is not limited to this value of SSI and other values may be chosen based on different performance criteria. For the mobile client, deep-fades are caused by either SSI fades or TSI fades. As observed before, these two types of fades are uncorrelated and may occur at different times.

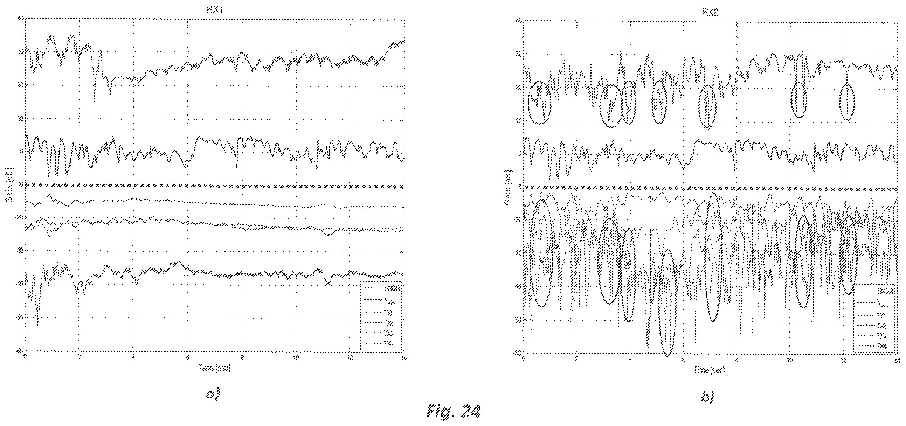

**Figure 24** shows the results obtained over the same route as in **Figure 23,** but using two extra antennas. Note that the SNDR trace is not aligned with the one in **Figure 24** because the instantaneous channel varies from one experiment to the next due to fast-fading effects. We observe that, by adding two extra antennas and running the transmit antenna selection algorithm, it is possible to remove deep-fades from the SSI trace and improve SNDR performance of both clients. **Figure 24a** shows that the stationary client does not undergo any SNDR deep fade. **Figure 24b** shows that the SNDR fades of the mobile client are only due to TSI, whereas the SSI fades are completely removed.

One embodiment of the invention scans through the available transmit antenna subsets until the first one that provides SSI above the predefined threshold is reached. Once that subset is found, the search stops thereby reducing the computational complexity of the algorithm.

In **Figures 23** and **24** we observed that the SSI exhibits a structured behavior with periods of deep-fade that alternate to periods of high gain. This temporal correlation between consecutive samples of SSI can be exploited to reduce the complexity of the antenna subset selection algorithm. In one embodiment, the same antenna subset is preserved until the SSI undergoes a deep-fade and its value drops below the predefined threshold. In another embodiment, the system keeps track of the statistics of the antenna subset that have been chosen in the past and only selects those for future transmissions.

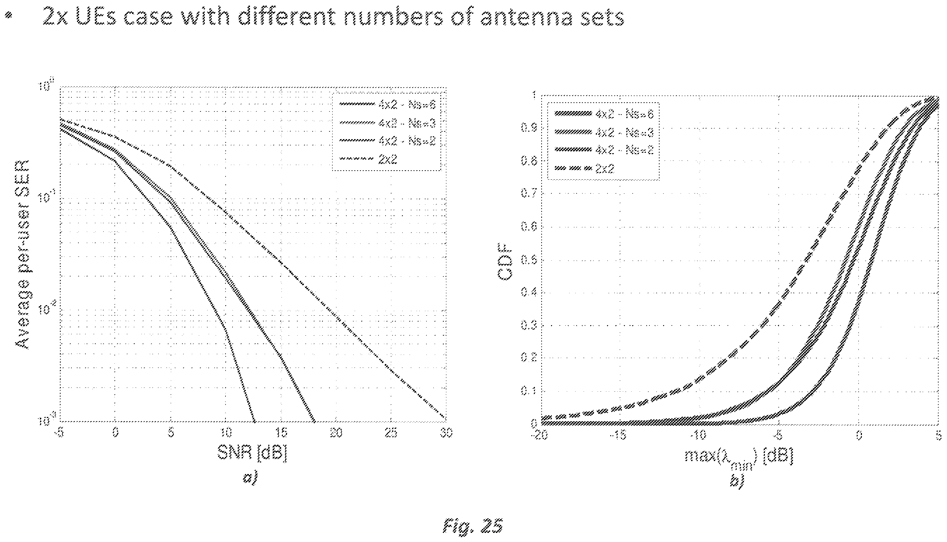

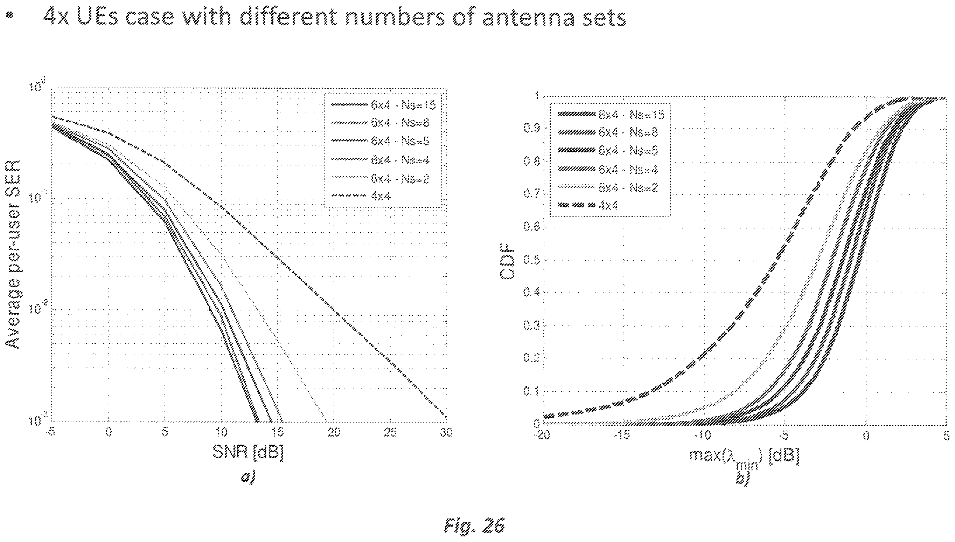

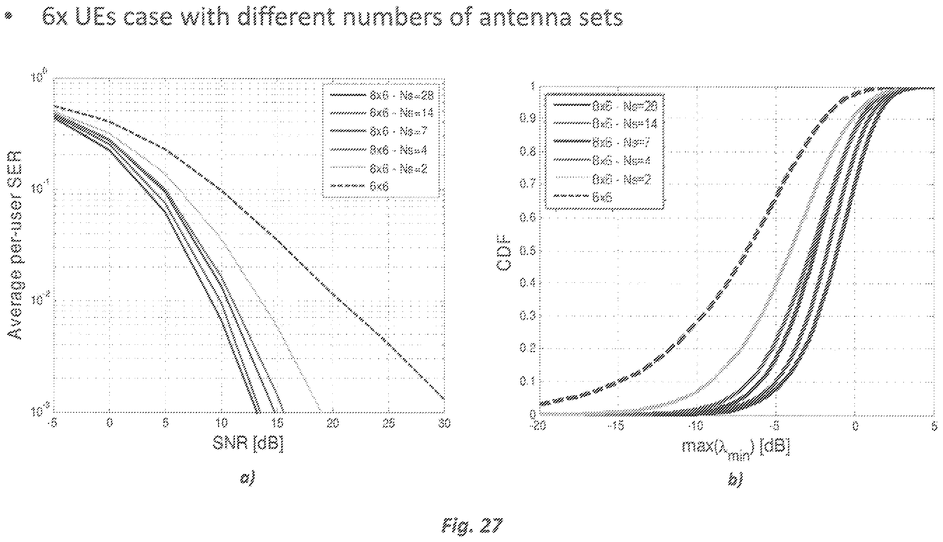

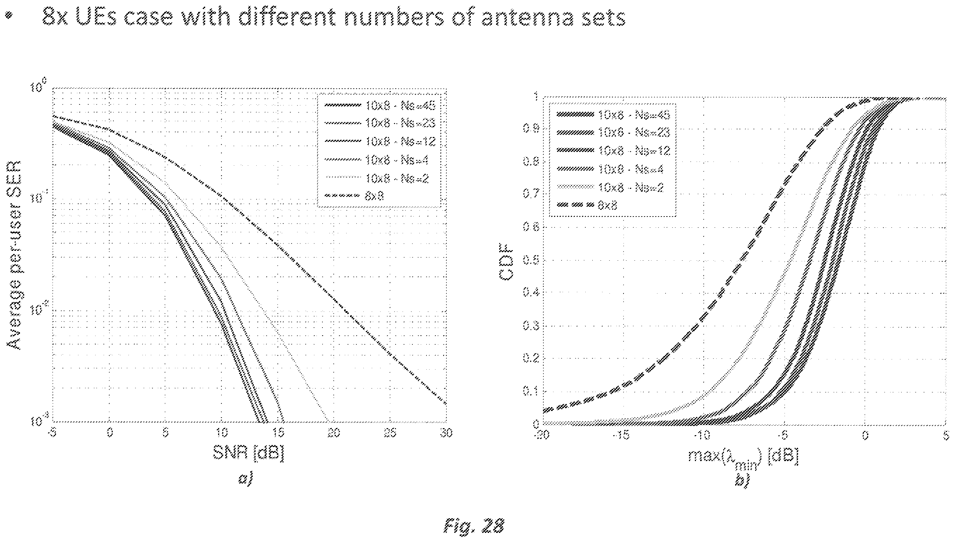

Another way to reduce computational complexity of the system is to reduce the number of combinations of transmit antennas to be chosen across with the antenna selection method. **Figures 25-28** show the simulated SER performance and CDF of the SSI for DIDO 4x2, 6x4, 8x6 and 10x8 systems. All these systems employ two extra antennas than the number of clients. Performance is shown for different numbers Ns of antenna subsets. We observe that, for any DIDO order, 10 or less subsets of transmit antennas suffice to approximate closely the SER performance of the same system using all possible combinations of antenna subsets. Reducing the number of antenna subsets can yield a significant reduction in computational complexity as the SSI does not need to be computed over all antenna subsets. One embodiment of the invention selects a limited number of subsets as a means to reduce the computational complexity of the system, while maintaining system performance close to ideal performance.

One embodiment of the invention uses combination of SSI and TSI to select the optimal antenna subset. For example, the antenna subset that provides the maximum SSI and TSI is selected. Another embodiment defines a first selection phase that identifies all antenna subsets that provide SSI above the predefined threshold. Then, a second selection phase chooses the subset that yields the largest TSI. Alternatively, another threshold is defined for the TSI and the subset that satisfies both SSI and TSI thresholds is selected.

All the methods and results described above for single-carrier systems can be directly extended to multi-carrier and/or OFDM systems by defining "frequency selectivity indicator" (FSI). For example, in OFDM systems every tone experiences a frequency flat channel. Then all methods described above can be applied on a tone-by-tone basis. In another embodiment, different combinations of SSI, TSI and FSI are employed to select the optimal antenna subset according to the criteria defined above.

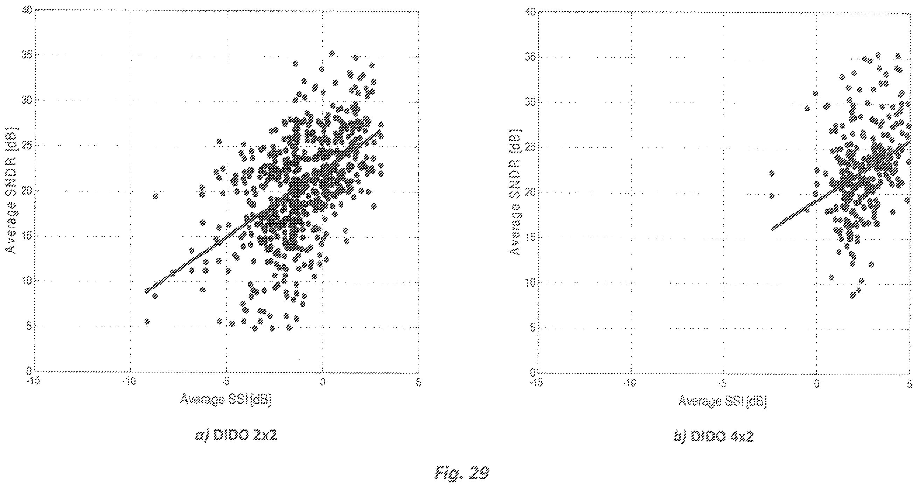

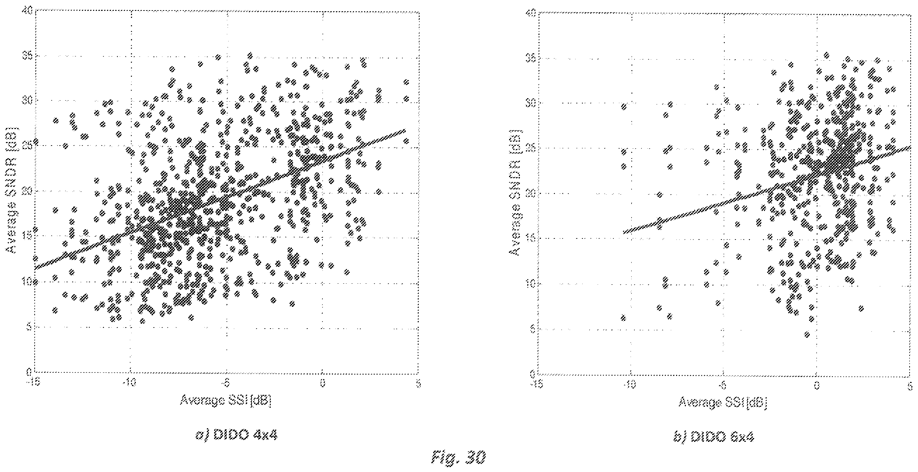

Finally, we show the performance of antenna selection algorithms in a variety of propagation conditions. **Figure 29** depicts the average SNDR (over periods of 5 seconds) versus the average SSI. Large average SSI indicates channels with high spatial diversity, thereby yielding large average SNDR. We observe that two extra antennas used for antenna selection going from DIDO 2x2 to 4x2 increases both average SNDR and SSI. Similar results are shown in **Figure 30** for DIDO 4x4 and 6x4.

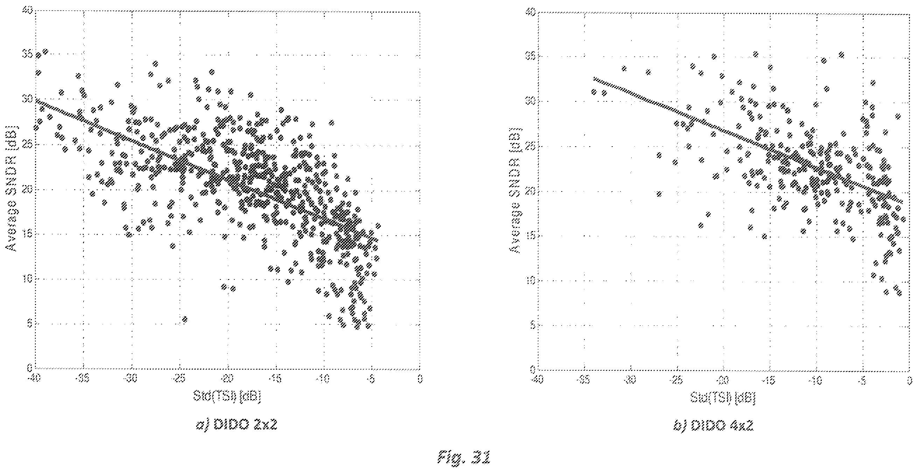

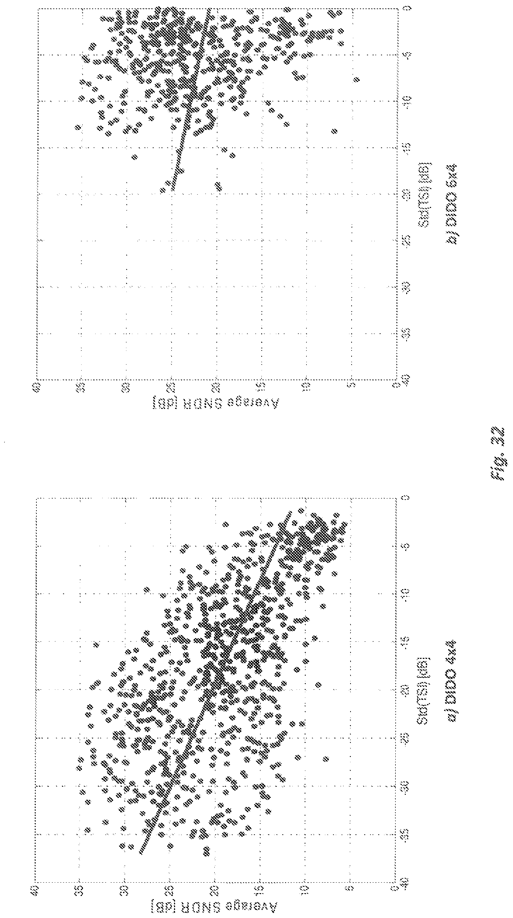

**Figure 31** depicts the average SNDR as a function of the standard deviation of the TSI for DIDO 2x2 and 4x2. High standard deviation indicates large time selectivity due to Doppler effects that degrade the SNDR performance. Similar results are showed in **Figure 32** for DIDO 4x4 and 6x4.

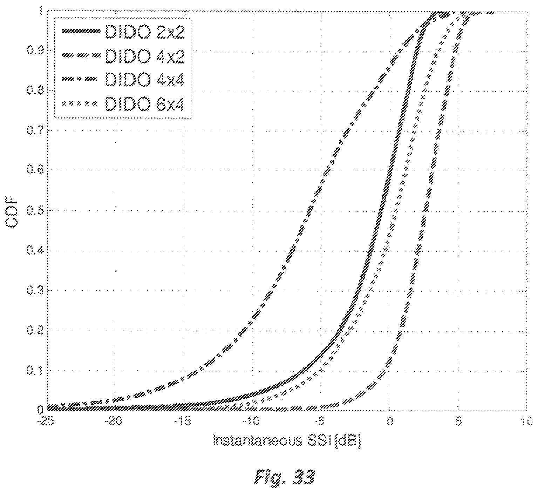

Finally, **Figure 33** compares the CDF of the instantaneous SSI for all four DIDO systems considered above. We observe that 4x4 has worse CDF performance than 2x2 due to reduced degrees of freedom when switching to higher order DIDO. In both cases, adding 2 extra antennas with transmit selection algorithms yield significant improvement in SSI performance.

## 4. Methods for User Selection

In one embodiment, spatial diversity is enhanced in DIDO channels via user selection. In this embodiment, if there are not enough degrees of freedom in the wireless channel for the given number of transmit antennas available in the system, then the system drops transmission to one or multiple clients. This technique may employ the SSI to measure the spatial diversity in the wireless link. When the SSI falls below a predefined threshold, one or multiple clients are dropped.

In one embodiment of the invention, the fastest moving client is dropped. In fact, the client experiencing the highest Doppler effect is most likely to undergo deep-fades. Another embodiment utilizes the TSI and FSI to select the client with lower channel quality and drops that client. When the client is dropped, the bits transmitted over that period are corrupted and those bits can be recovered via forward error correction (FEC) coding. Another embodiment utilizes alternative multiplexing technique such as TDMA, FDMA, OFDMA or CDMA to serve the dropped clients.

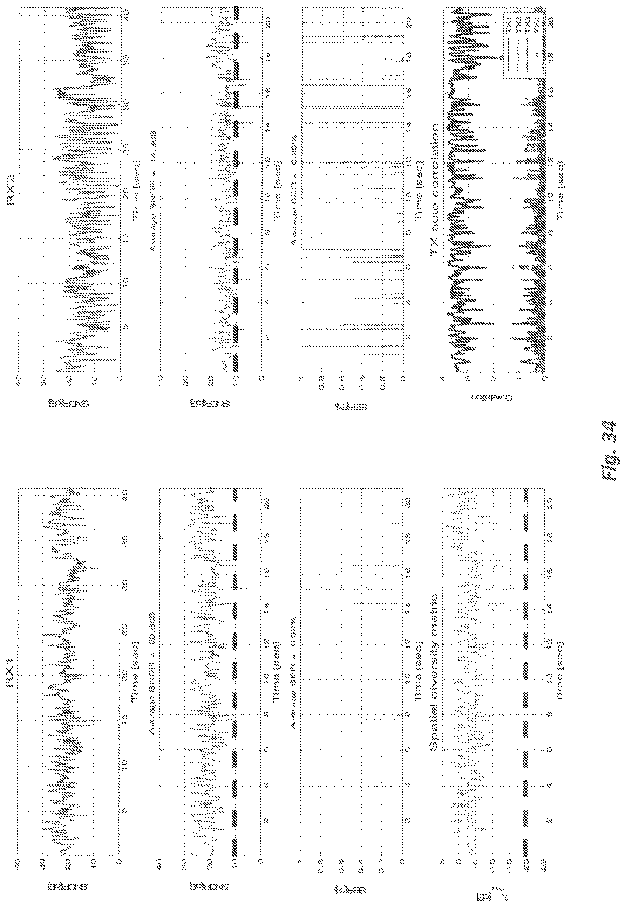

**Figure 34** shows the results from one particular measurement set with approximately 20 seconds of data. The first row depicts the measured SNDR trace for the two clients denoted as RX1 (stationary client) and RX2 (mobile client); the second row is the simulated SNDR with the target fixed to 10dB to demodulate 4-QAM constellations reliably; the third row is the simulated SER; finally the fourth row depicts the SSI and the auto-correlation coefficients. We observe that even if RX1 is stationary, its SNDR drops below the target due to lack of spatial diversity, as indicated by low SSI. If the SSI target is too low (i.e., -20dB in the figure) the user selection algorithm is never triggered and RX1 undergoes severe SER degradation.

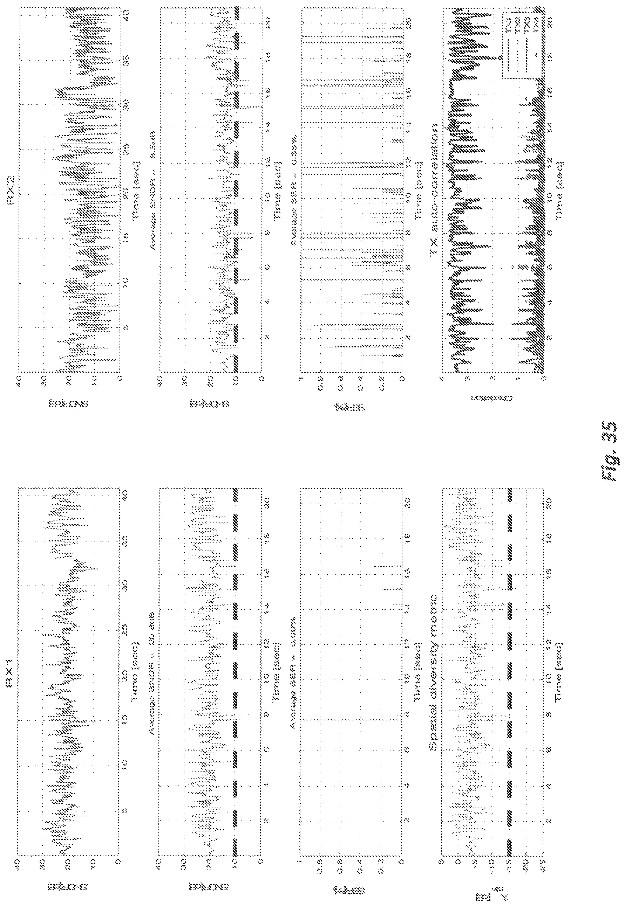

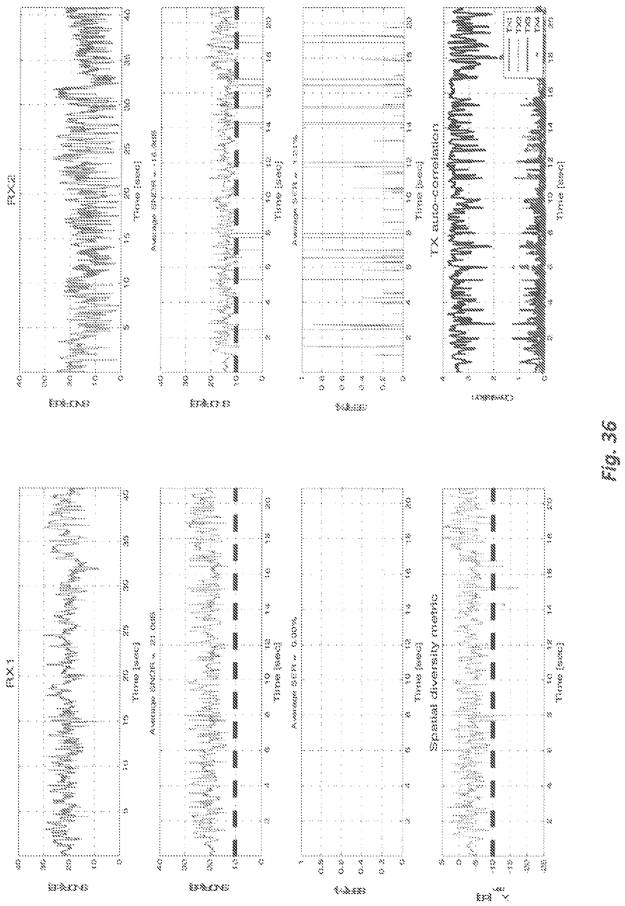

**Figure 35** shows the case where the SSI target is raised to -15dB and as a result the SER performance improves. Further improvement is achieved by raising the target SSI further up -10dB as in **Figure 36,** in which case the SER for RX1 is reduced to zero throughout the duration of the measurement. In this case the SSI threshold is determined based on the SER performance, but this invention is not limited to that and any other performance criterion can be used for that.

## 5. Methods for Transmit Power Balancing

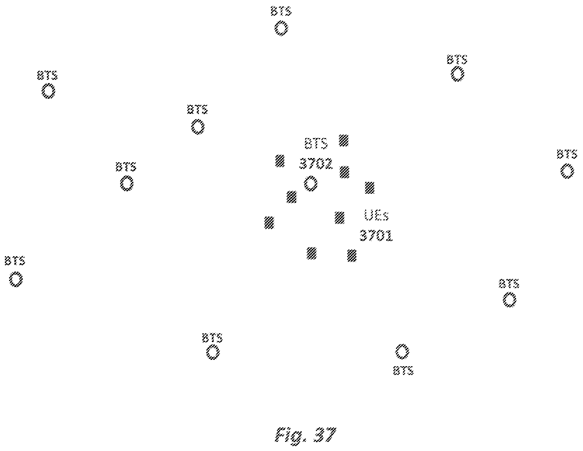

Transmit power imbalance occurs when most or all of the clients are around one BTS and far from all the others, such that one BTS overpowers the others. Transmit power imbalance reduces channel spatial diversity (i.e., decreases the SSI), thereby adversely affecting system performance. One exemplary scenario is shown in **Figure 37** where multiple UEs 3701 (identified as squares) are clustered around one particular BTS 3702 (identified with a circle) and located far away from the other BTSs. This scenario would happen, for example, when there is an event in one location in which the group of clients are participating, and all other BTSs are far away. One embodiment of the invention adaptively adjusts the power of the BTSs in such a way that the power received at all clients from all BTSs is balanced. In one embodiment of the invention, the power of the BTS that is overpowering all the others is reduced until the power received by the clients balances the power received from all other BTSs. In another embodiment of the invention the power from all other BTSs is increased until the received power level from all BTSs to every client is balanced.

In TDD systems in which channel reciprocity is exploited, the channel state information (CSI) for the downlink is obtained from the uplink. The uplink training signal is quantized by the ADC at the receiver of the BTS and, as such, it has limited dynamic range, depending on the number of bits of the ADC. If all clients are clustered around one of the BTSs, the CSI for that BTS will have a much larger amplitude than the one from all the others and, as such, it will make the DIDO channel matrix singular and limit the spatial degrees of freedom of the link. That is the effect of transmit power imbalance. In FDD systems or TDD systems that do not exploit channel reciprocity, the same issue manifests at the receiver of the client devices also equipped with ADC. Moreover, the CSI may need to be quantized or mapped into bits via limited feedback techniques, before being sent over the wireless link. That quantization again limits the dynamic range for the CSI and yields a power imbalance when one of the BTSs overpowers the other. Embodiment of the invention described herein employ techniques for preventing power imbalance in MU-MAS and DIDO systems.

As shown in **Figure 13,** one way to identify transmit power imbalance is by looking at the auto-correlation coefficient $\rho_a$: when the auto-correlation value approximates the number of the BTSs (assuming the transmit spatial covariance matrix is normalized with trace equal to the number of BTSs) the system undergoes transmit power imbalance. For example, in a power imbalanced DIDO 4x4 system, one auto-correlation would be close to "4" and all other auto-correlation coefficients would be close to zero. Contrarily, in a perfectly balanced system, all auto-correlation coefficients would be "1".

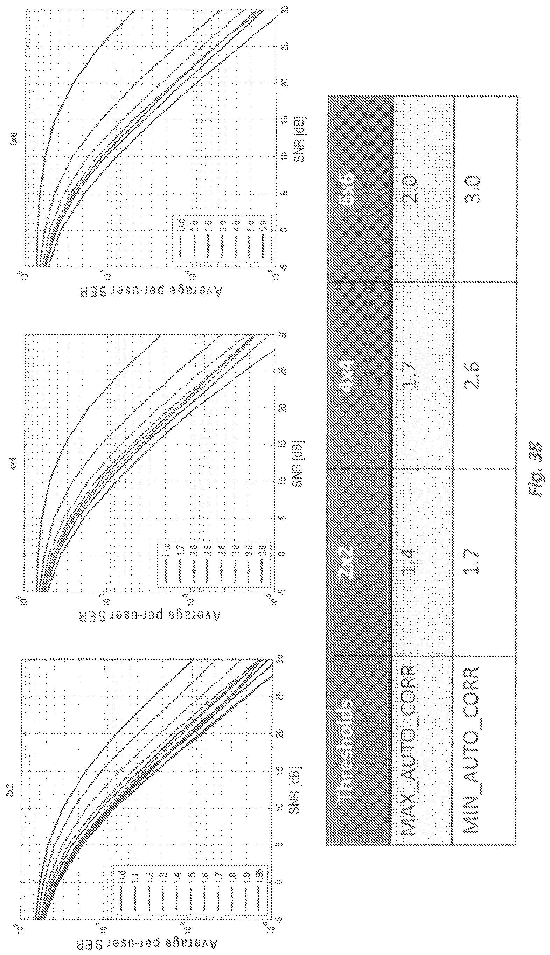

Transmit power imbalance adversely affects the performance of the system. For example, **Figure 38** shows the SER performance of different order DIDO systems for different values of the maximum auto-correlation coefficient. As the maximum auto-correlation decreases to "1", the SER performance approaches the ideal i.i.d. case. These SER results can be used to define thresholds that distinguish balanced systems from imbalanced systems. These auto-correlation thresholds can be determined through numerical, analytical, or empirical methods. For example, in **Figure 38** the thresholds are chosen such that the SER performance does not degrade more than 3dB from the ideal i.i.d. performance. The invention, however, is not limited to this performance criterion and any other criteria that measure the system performance can be used. Another embodiment of the invention employs a hysteresis loop where two different thresholds are defined for the auto-correlation coefficient as in the table in **Figure 38.**

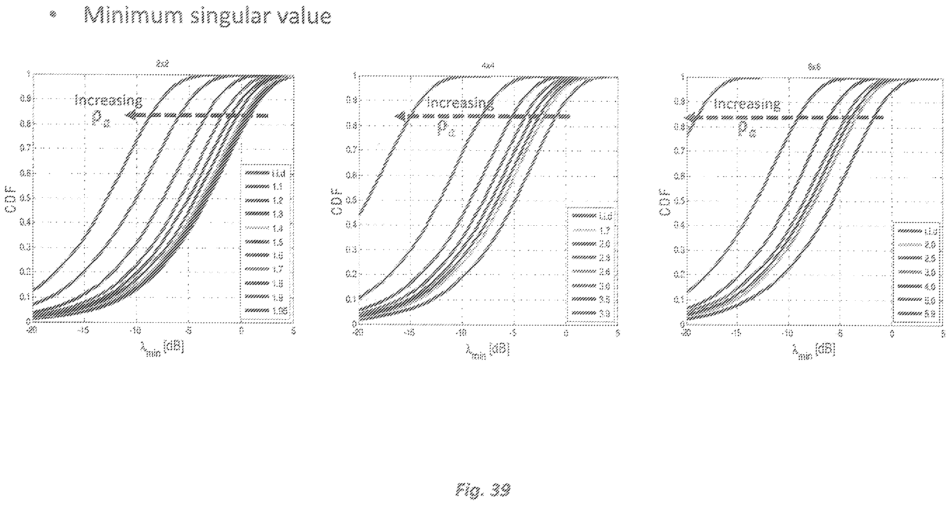

**Figure 39** shows the CDF of the SSI for different values of maximum auto-correlation. We observe that increasing the maximum auto-correlation yields worse SSI performance due to reduced spatial diversity.

Embodiments of the invention propose different methods for balancing the transmit power across all BTSs in the MU-MAS or DIDO system. These methods can be executed at a regular rate. In one embodiment, the proposed methods run every execution cycle. However, depending on the constraints of the system being used, a lower rate may be used. Hereafter, we described these methods in details.

One embodiment of the invention aims to keep the transmit power of each BTS at the maximum possible level, while staying within the auto-correlation thresholds. We define two different thresholds, as shown in **Figure 38.** The upper threshold, MAX_AUTO_CORR, represents the point at which the auto correlation number results in a significant drop in spatial diversity. If the auto-correlation number goes above this threshold, there will be a large drop in system performance.

The lower threshold, MIN_AUTO_CORR acts as a buffer to prevent the system from changing power settings too often. If a given BTS has an auto correlation number below MIN_AUTO_CORR, it can safely increase its transmit gain value (assuming transmit gain is not already set to its maximum). Note that the transmit gain may be the analog gain of the power amplifier in the RF chain and/or the digital gain corresponding to a certain level of the DAC. If the auto-correlation is between the MIN_AUTO_CORR and MAX_AUTO_CORR, no action is taken. If the power was to be increased in this instance, it could increase the auto-correlation number until it was above the MAX_AUTO_CORR, at which point the power would be decreased until it was below the MAX_AUTO_CORR, etc. This effect would cause the power to be changing constantly, which is inefficient and may potentially cause performance degradation.

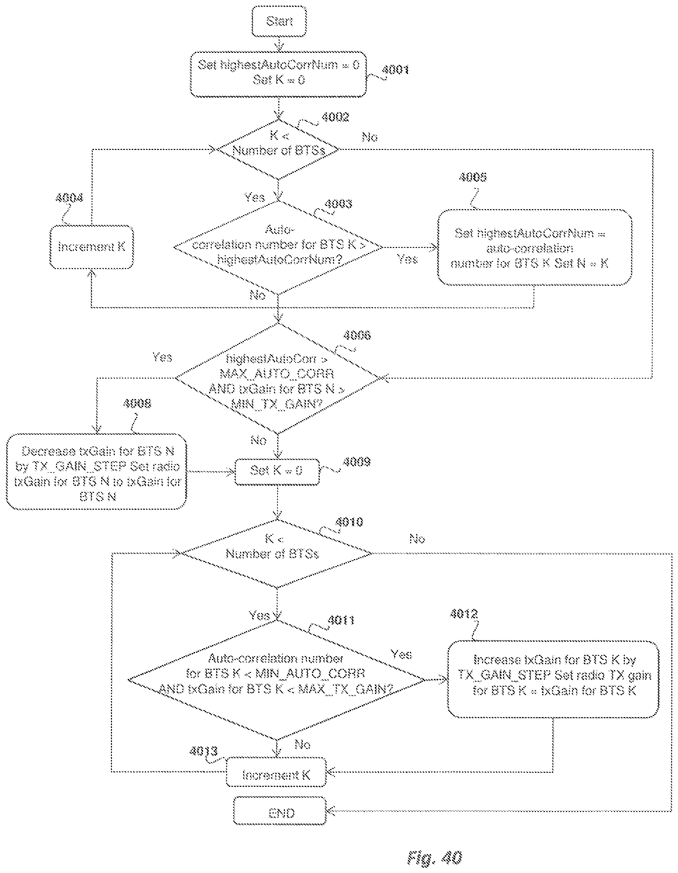

One embodiment of a method is illustrated in **Figure 40** and its associated pseudo-code is described as follows:

```
BEGIN
 INITIALIZE txGain for each BTS
 SET highestAutoCorrNum = 0
 SET K = 0
 REPEAT WHILE K < number of BTSs
    IF auto correlation number for BTS K > highestAutoCorrNum THEN
    SET maxAutoCorrNum = auto correlation number of BTS K
    SET N = K
  END IF
  INCREMENT K
 END REPEAT
 IF highestAutoCorrNum > MAX_AUTO_CORR AND
 txGain for BTS N > MIN_TX_GAIN THEN
  Decrease the txGain for BTS N by TX_GAIN_STEP
  Set radio TX gain for BTS N = txGain for BTS N
 SET K = 0
 REPEAT WHILE K < number of BTSs
  IF txGain for BTS K < MAX_TX_GAIN AND
  auto correlation number for BTS K < MIN_AUTO_CORR THEN
    INCREASE txGain for BTS K by TX_GAIN_STEP
    SET radio TX gain for BTS K to txGain for BTS K
  END IF
  INCREMENT K
 END REPEAT
```

```
END
```

In summary, this method first determines which BTS has the highest correlation. That correlation value is saved, along with the index of the corresponding BTS. Then, if the highest correlation is above the upper threshold, the transmit gain is decreased. The transmit gain will not decrease below a defined minimum. Then, for each BTS, the transmit gain is increased if the highest correlation is below the lowest value. If the highest auto-correlation number is between the two thresholds, no action is taken. This is the target mode of operation of the proposed method.

Turning to the specific details of **Figure 40,** at 4001, the variables highestAutoCorrNumber and K are initialized to zero. Steps 4002 and 4004 ensure that the loop repeats for each BTS. At 4002, if the current value of K is currently less than the number of BTSs, then at 4003, a determination is made as to whether the autocorrelation number for BTS K is greater than the current highest auto-correlation number. If so, then at 4005 the variable highestAutoCorrNum is set to the auto-correlation number for BTS K (i.e., BTS K has the highest auto-correlation number) and control variable N is set equal to K.

At 4006, if the highestAutoCorrNum is greater than the maximum auto-correlataion (MAX_AUTO_CORR) and the transmit gain (txGain) for BTS N is greater than the minimum transmit gain (MIN_TX_GAIN) then, at 4008, the transmit gain for BTS N is decreased using a specified step size (TX_GAIN_STEP) and the txGain of BTS N's radio is set to the new txGain value.

At 4009, the control value K is set equal to zero. Step 4010 ensures that each BTS is addressed by the loop of steps 4011-4012. That is, if K is currently less than the number of BTSs (i.e., if all BTSs have not been analyzed) then, at 4011, a determination is made as to whether the auto-correlation number for BTS K is less than the minimum auto-correlation (MIN AUTO CORR) and the txGain for BTS K is less than the maximum allowable transmit gain value (MAX_TX_GAIN). If both conditions are met then, at 4012, the transmit gain for BTS K is increased by the predefined step size (TX_GAIN_STEP) and the new txGain is set on BTS K's radio. The control value K is incremented at 4013 and, at 4010, if K is equal to the number of BTSs (i.e., each BTS has been analyzed), the process terminates.

In another embodiment of the invention, auto-correlation values are mapped to transmit gain values. One embodiment uses a linear mapping, shown below. Although a linear mapping is simple to implement, the adverse effect of the auto-correlation on system performance does not scale linearly. Typically, system performance is significantly affected only after the auto-correlation number reaches some fraction of its maximum value. For example, DIDO 2x2 performance is seriously affected only when the maximum auto-correlation is above 1.95 (or 97.5% of its maximum value). Another mapping algorithm may utilize an exponential function or another power function designed to operate in these ranges, rather than a linear function.

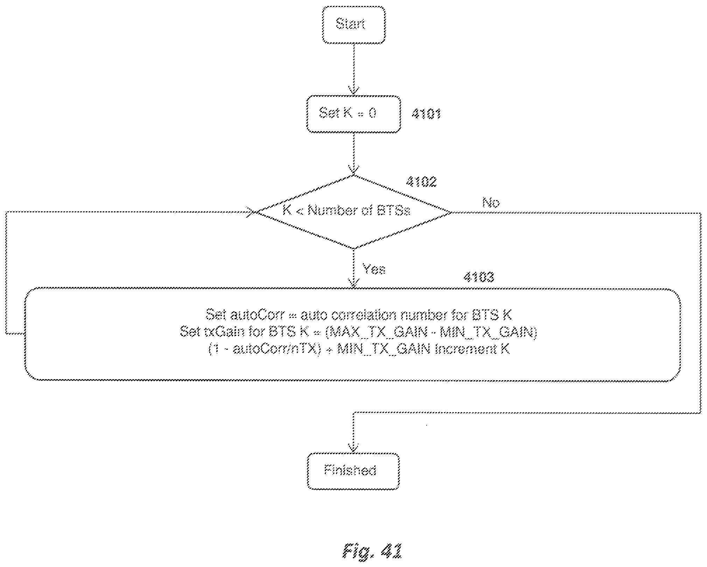

One embodiment of the method is illustrated in **Figure 41** and its pseudo-code is described as follows:

```
BEGIN
 INITIALIZE txGain for each BTS
 SET K = 0
 REPEAT WHILE K < number of BTSs
  SET autoCorr = auto correlation number for BTS K
  SET txGain for BTS K =
(MAX_TX_GAIN - MIN_TX_GAIN) * (1 - autoCorr/nTX) + MIN_TX_GAIN
  INCREMENT K
 END REPEAT
```

This method takes an auto-correlation number and scales it directly into a transmit gain value. Most of the complexity in the method is to allow different orders of DIDO and different values of MIN_TX_GAIN and MAX_TX_GAIN. For example, the simplest form of the equation for a DIDO 2x2 system with transmit gain that ranges between A and B would be:

$$(B - A) * \left(1 - \frac{\rho_a}{2}\right) \qquad (9)$$

For example, an auto-correlation value of 2 (highest value for DIDO 2x2) would result in the transmit gain for that BTS being set to A=0 (lowest transmit power), while an auto correlation value of 0 (lowest value for DIDO 2x2) would result in the transmit gain for that BTS being set to B=30 (highest transmit power). It should be noted that both of these cases indicated extreme power imbalance. In the first case ($\rho_a$ = 2.0), this BTS is being received too strongly across the UEs. In the second case ($\rho_a$ = 0.0), the other BTS is being received too strongly. A perfectly balanced system, with $\rho_a$ = 1.0 for both BTSs, would result in the transmit gain staying at 15 (being the default value), as desired.

Turning to the specifics of **Figure 41,** at 4101, the control variable K is initialized to 0. At 4102, if K is less than the number of BTSs being observed, then the operations set forth in 4103 are performed. Specifically, the variable autoCorr is set equal to the current auto correlation number for BTS K. In addition, the variable txGain for BTS K is set equal to the difference between the maximum transmit gain value and the minimum transmit gain value (MAX_TX_GAIN - MIN_TX_GAIN) multiplied by (1 - autoCorr/nTX) and added to the minimum transmit gain value (MIN_TX_GAIN). Control variable K is then incremented until K = the number of BTSs. The process then terminates.

Both of the previous methods are designed to adjust the transmit gain of every BTS within a single step. Another embodiment of the invention defines a method that always adjusts the power of only two BTSs. With this method, however, in certain scenarios one or more of the BTSs could remain at low transmit power setting for long periods of time. Thus, in practical systems this method would be combined with an algorithm similar to Method 1 (using thresholds as in **Figure 40**) where the power of each BTS is increased if the auto-correlation number for that BTS is below MIN_AUTO_CORR.

The pseudo-code for Method 3 described above is as follows:

```
BEGIN
  INITIALIZE txGain for each BTS
  SET highestAutoCorrNum = 0
  SET lowestAutoCorrNum = MAX_AUTO_CORR
  SET K = 0
  REPEAT WHILE K < number of BTS
   IF auto correlation number for BTS K > highestAutoCorrNum THEN
      SET highestAutoCorrNum = auto correlation number of BTS K
      SET highestIdx = K
   ELSE IF auto correlation number for BTS K < lowestAutoCorrNum THEN
      SET lowestAutoCorrNum = auto correlation number of BTS K
      SET lowestIdx = K
   END IF
   INCREMENT K
  END REPEAT
  DECREASE txGain for BTS highestIdx by TX_GAIN_STEP
  IF txGain for BTS highestIdx < MIN_TX_GAIN THEN
   SET txGain for BTS highestIdx = MIN_TX_GAIN
  END IF
  SET radio TX gain for BTS highestIdx = txGain for BTS highestIdx
  INCREASE txGain for BTS lowestIdx by TX_GAIN_STEP
  IF txGain for BTS lowestIdx > MAX_TX_GAIN THEN
   SET txGain for BTS lowestIdx = MAX_TX_GAIN
  END IF
  END
```

In summary, this method first determines the maximum and minimum auto-correlation values and records the indices for the corresponding BTS. Then, the transmit gain of the BTS with the highest auto correlation is reduced by TX_GAIN_STEP, and the transmit gain of the BTS with the lowest auto correlation is increased by TX_GAIN_STEP.

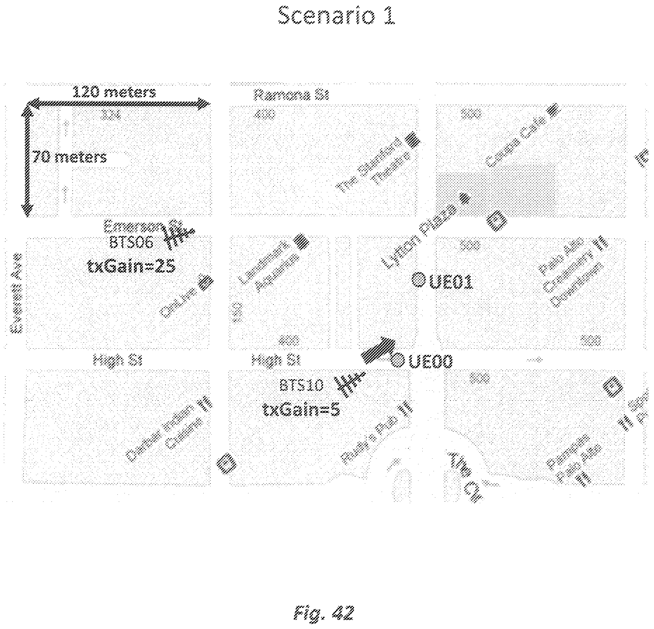

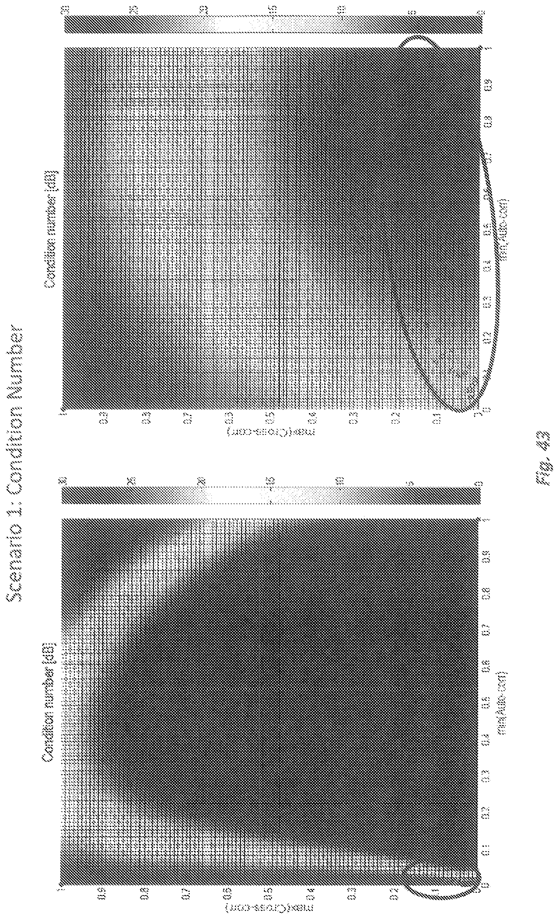

Finally, we show the performance of the transmit power balancing methods in practical outdoor propagation scenarios. The first scenario we considered is depicted in **Figure 42**. Transmit power imbalance is caused by the two clients UE00, UE01 being in close proximity to BTS 10. The distribution of the condition number with and without power imbalance is shown in **Figure 43.**

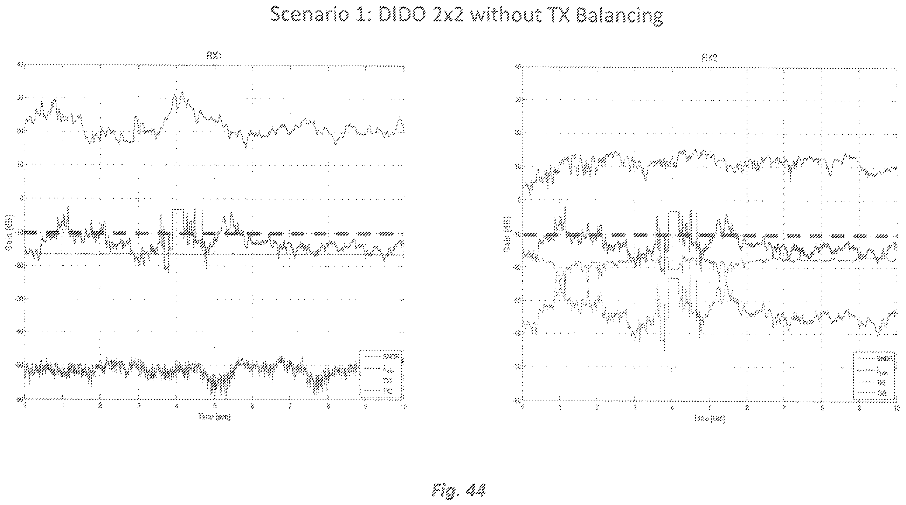

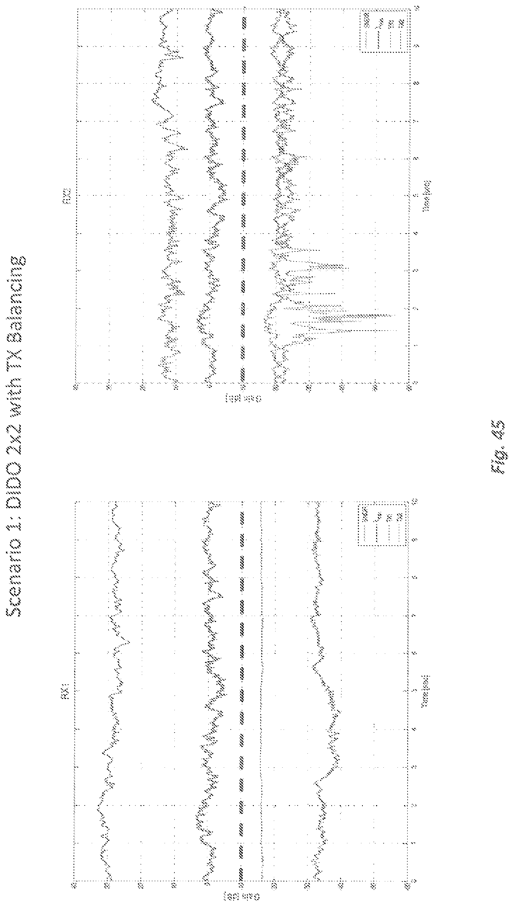

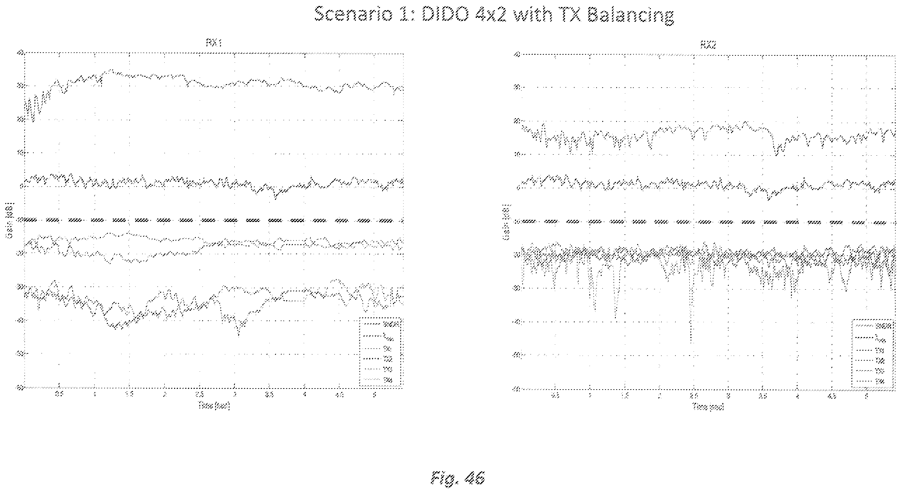

**Figures 44-46** show the channel traces (SNDR, SSI and TSI) for three different cases: i) DIDO 2x2 without transmit power balancing method; ii) DIDO 2x2 with transmit power balancing method; iii) DIDO 4x2 with transmit power balancing method in combination with antenna selection method. The SSI threshold is set to -10dB. We observe that transmit power balancing and antenna selection methods help improve the SSI trace and consequently the SNDR performance.

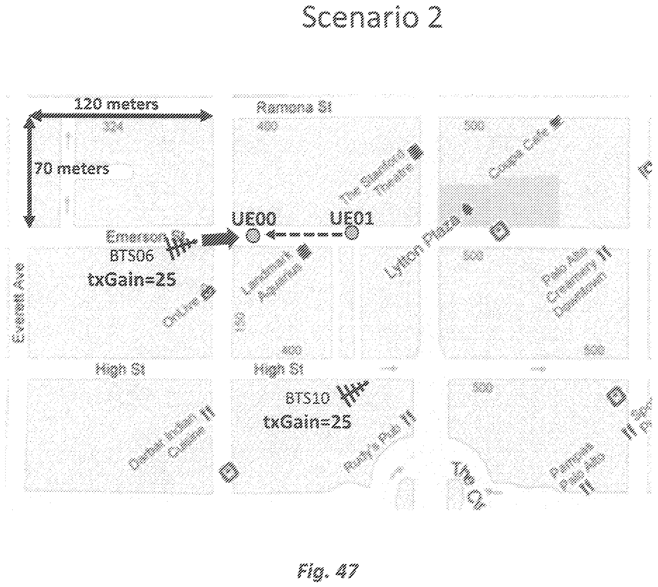

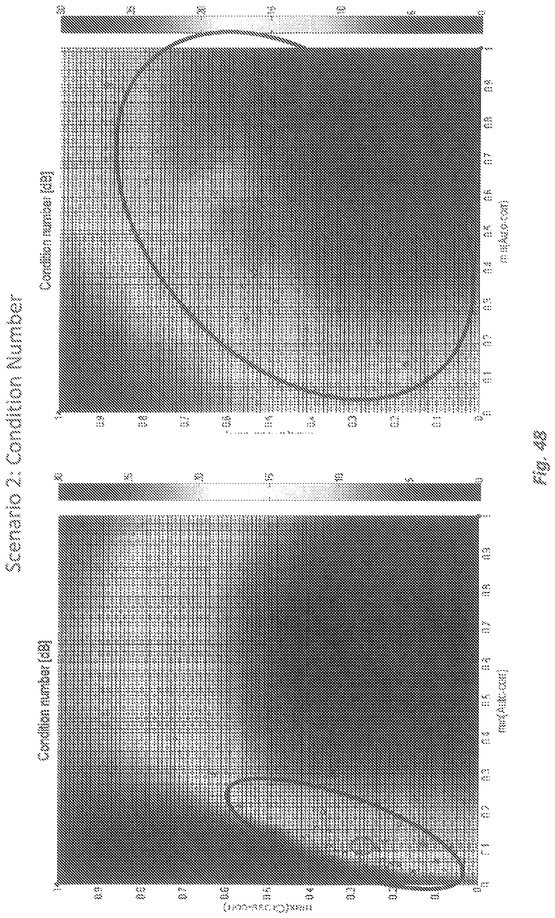

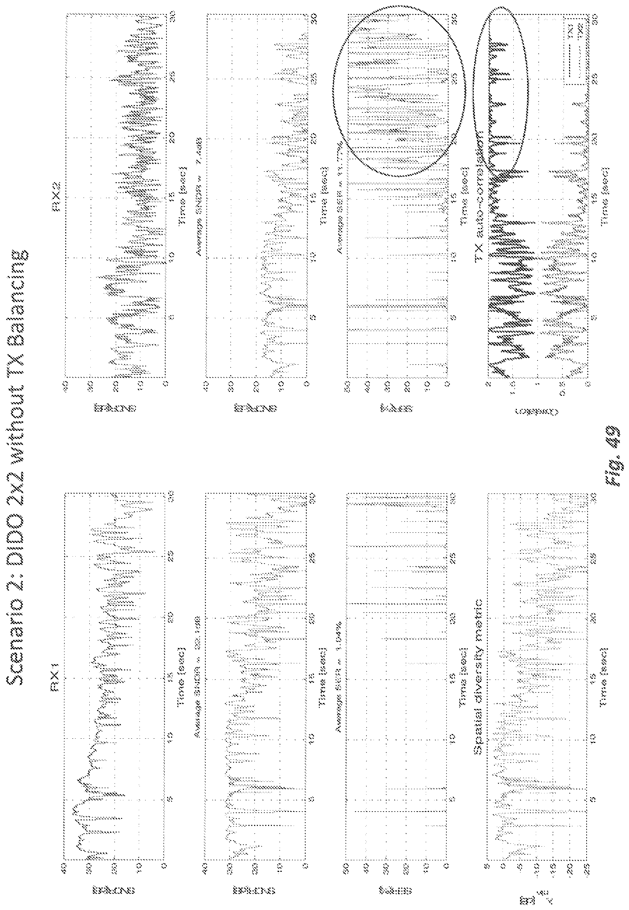

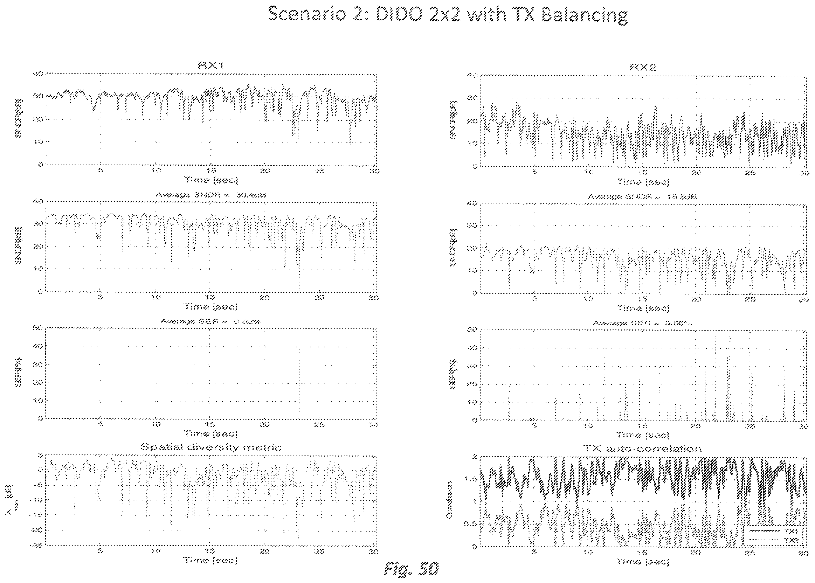

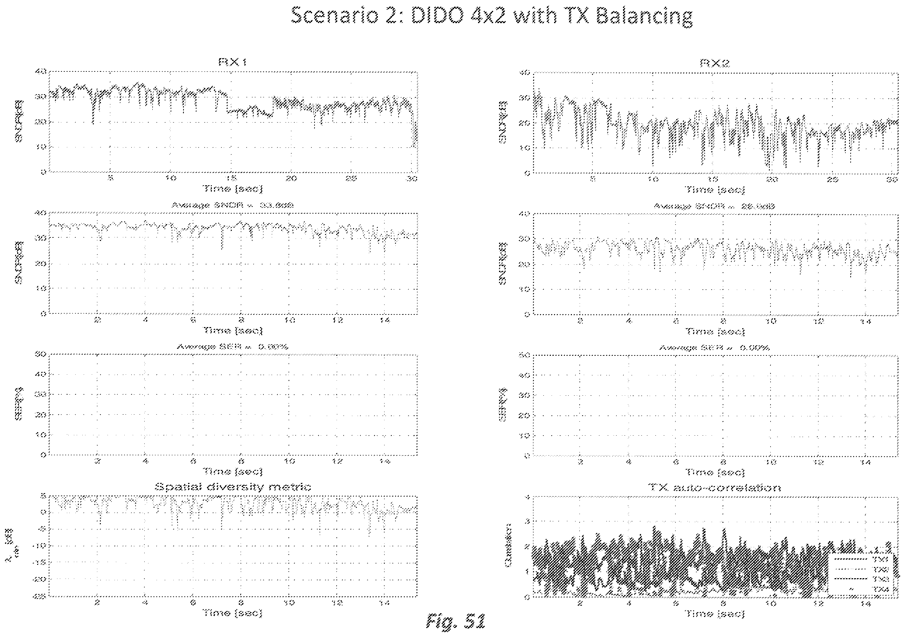

A different scenario is depicted in **Figure 47,** where BTS 6 is the source of transmit power imbalance. **Figure 48** shows the condition number distribution with and without imbalance and **Figures 49-51** depict channel traces for different algorithms as before. Once again, both transmit power balancing and antenna selection methods improve SSI and SNDR performance.

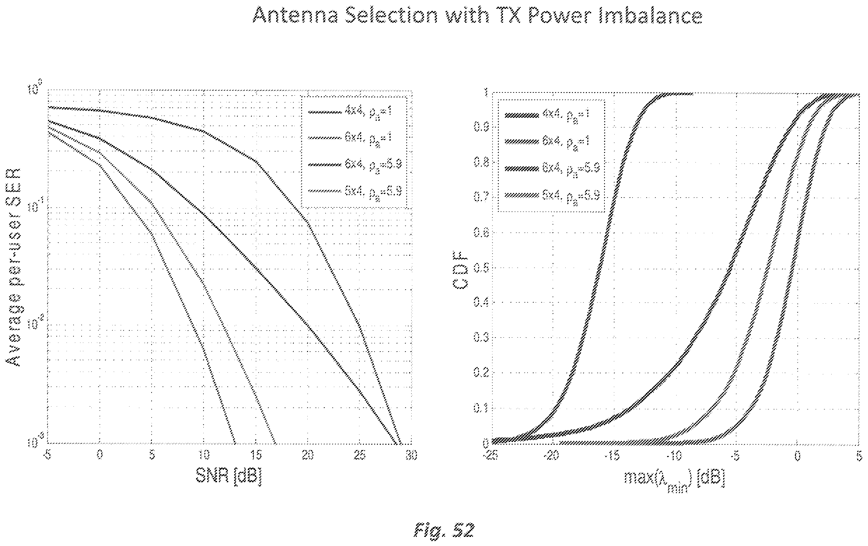

Another embodiment of the invention employs a combination of transmit power balancing and antenna selection algorithms. In this method, the extra antenna that provides the largest auto-correlation coefficient is removed and the conventional antenna selection algorithm is applied with the remaining extra antennas. For example, **Figure 52** shows the SER and CDF of the SSI for DIDO systems with 4 clients. The performance of DIDO 6x4 is significantly degraded when the system undergoes transmit power imbalance. By removing the BTS that yields a large auto-correlation coefficient, system performance is improved significantly as shown by the SER curve for DIDO 5x4.

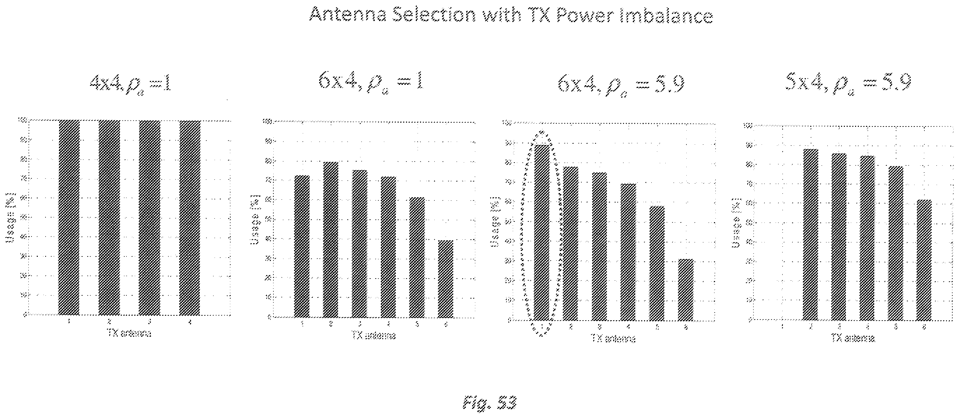

Finally, **Figure 53** shows the statistics of the BTSs that have been selected for transmission and their relative usage. The last graph shows that DIDO 5x4 with transmit power balancing and antenna selection has zero usage of BTS1 because that BTS has been removed as a result of high auto-correlation value.

## 6. References

[1] R. A. Monziano and T. W. Miller, Introduction to Adaptive Arrays, New York: Wiley, 1980.

[2] K. K. Wong, R. D. Murch, and K. B. Letaief, "A joint channel diagonalization for multiuser MIMO antenna systems," IEEE Trans. Wireless Comm., vol. 2, pp. 773-786, Jul 2003;

[3] M. Costa, "Writing on dirty paper," IEEE Transactions on Information Theory, Vol. 29, No. 3, Page(s): 439 - 441, May 1983.

[4] U. Erez, S. Shamai (Shitz), and R. Zamir, "Capacity and lattice-strategies for cancelling known interference," Proceedings of International Symposium on Information Theory, Honolulu, Hawaii, Nov. 2000.

[5] G. Caire and S. Shamai, "On the achievable throughput of a multiantenna Gaussian broadcast channel," IEEE Trans. Info.Th., vol. 49, pp. 1691-1706, July 2003.

[6] M. Tomlinson, "New automatic equalizer employing modulo arithmetic," Electronics Letters, Page(s): 138 - 139, March 1971.

[7] H. Miyakawa and H. Harashima, "A method of code conversion for digital communication channels with intersymbol interference," Transactions of the Institute of Electronic

[8] D.-S. Shiu, G. J. Foschini, M. J. Gans, and J. M. Kahn, "Fading correlation and its effect on the capacity of multielement antenna systems," IEEE Trans. Comm., vol. 48, no. 3, pp. 502-513, Mar. 2000.

[9] J. P. Kermoal, L. Schumacher, K. I. Pedersen, P. E. Mogensen, and F. Frederiksen, "A stochastic MIMO radio channel model with experimental validation," IEEE Jour. Select. Areas in Comm., vol. 20, no.6, pp. 1211-1226, Aug. 2002.

[10] R. Chen, R. W. Heath, Jr., and J. G. Andrews, "Transmit Selection Diversity for Unitary Precoded Multiuser Spatial Multiplexing Systems with Linear Receivers," IEEE Trans. on Signal Processing, vol. 55, no. 3, pp. 1159-1171, March 2007.

## Claims

1. A method implemented within a system comprising circuitry and program code to perform the operations of:

   obtaining a first plurality of N streams of information from a first network (102),
   transforming the first plurality of N streams of information into a second plurality of M streams of bits, each of the second plurality of M streams of bits being a combination of some or all of the first plurality of N streams of information,
   sending the second plurality of M streams of bits to M distributed transceiver stations (103) over a second network, the transceiver stations (103) simultaneously sending the second plurality of M streams of bits over wireless links to at least one client device in a way that at least one client device receives at least one of the original first plurality of N streams of information,
   employing transmit power balancing to enhance channel spatial diversity,
   wherein a maximum auto-correlation coefficient of a spatial covariance matrix is used as an indication of transmit power imbalance (4003, 4005) and,
   wherein thresholds of auto-correlation are defined to select between power balanced and imbalanced systems and those thresholds are obtained based on certain performance criterion (4006, 4011) and,
   wherein the auto-correlation is mapped into a transmit gain value and the system uses that value to adaptively adjust the radio frequency (RF) power of the transceiver stations (4012).

2. A system comprising circuitry and program code to perform the operations of:

   obtaining a first plurality of N streams of information from a first network (102),
   transforming the first plurality of N streams of information into a second plurality of M streams of bits, each of the second plurality of M streams of bits being a combination of some or all of the first plurality of N streams of information,

sending the second plurality of M streams of bits to M distributed transceiver stations (103) over a second network, the transceiver stations (103) simultaneously sending the second plurality of M streams of bits over wireless links to at least one client device in a way that at least one client device receives at least one of the original first plurality of N streams of information,

employing transmit power balancing to enhance channel spatial diversity,

wherein a maximum auto-correlation coefficient of a spatial covariance matrix is used as an indication of transmit power imbalance (4003, 4005) and,

wherein thresholds of auto-correlation are defined to select between power balanced and imbalanced systems and those thresholds are obtained based on certain performance criterion (4006, 4011) and,

wherein the auto-correlation is mapped into a transmit gain value and the system uses that value to adaptively adjust the radio frequency (RF) power of the transceiver stations (4012).

3. The method as in claim 1 or the system as in claim 2 wherein transmit antenna selection, user selection and/or transmit power balancing are employed.

4. The method or system as in claim 3 wherein a space selectivity indicator (SSI) and/or time selectivity indicator (TSI) are used as measures of the channel diversity,

wherein a minimum singular value of the effective channel matrix of every client device or a minimum singular value or the condition number of the composite channel matrix from all client devices is used as SSI and/or

wherein an absolute value of the sum of the complex channel gain from some or all transceiver stations (103) is used as TSI

5. The method or system as in claim 4 further comprising defining different subsets of transmit antennas and selects the subset that optimizes the SSI for transmission over the wireless links.

6. The method or system as in claim 4 wherein the selection criterion is based on SSI and/or TSI thresholds derived from measurements.

7. The method or system as in claim 4 wherein the SSI is used to measure and predict a plurality of areas of coherence.

8. The method or system as in claim 4 wherein an average SSI is used to select adaptively between fixed transmit antenna configuration and transmit antenna selection systems based on the changing channel conditions.

9. The method or system as in claim 4 wherein temporal correlation of the SSI is exploited to select the optimal antenna subset while reducing the computational complexity of the system.

10. The method or system as in claim 5 wherein searching for the optimal antenna subset is suspended as soon as the first subset that satisfies the SSI threshold is found, thereby reducing computational complexity.

11. The method or system as in claim 5 wherein only a limited number of antenna subsets are selected based on certain performance criterion as a means to reduce the computational complexity of the system.

12. The method or system as in claim 3 wherein one of the transceiver stations that overpowers the other transceiver stations reduces its transmit power to balance the power from all transceiver stations to the clients, or

wherein one of the transceiver stations that overpowers the other transceiver stations keeps its power level unaltered, the other transceiver stations increase their transmit power to balance the power from all transceiver stations to the clients.

13. The method as in claim 1 or the system as in claim 2 wherein the performance criterion is the symbol error rate (SER), and/or the selection between power balanced and imbalanced systems is based on a hysteresis loop and multiple thresholds of auto-correlation are defined for that hysteresis.

**Patentansprüche**

1. Verfahren, das in einem System implementiert ist, umfassend Schaltlogik und Programmcode zum Durchführen der Operationen:

Erhalten einer ersten Vielzahl von N Informationsströmen von einem ersten Netzwerk (102),

Umwandeln der ersten Vielzahl von N Informationsströmen in eine zweite Vielzahl von M Bitströmen, wobei jeder der zweiten Vielzahl von M Bitströmen eine Kombination von einigen oder allen der ersten Vielzahl von N Informationsströmen ist,

Senden der zweiten Vielzahl von M Bitströmen an M verteilte Transceiver-Stationen (103) über ein zweites Netzwerk,

wobei die Transceiver-Stationen (103) gleichzeitig die zweite Vielzahl von M Bitströmen über drahtlose Verbindungen an mindestens eine Client-Vorrichtung auf eine Weise senden, dass mindestens eine Client-Vorrichtung mindestens einen der ursprünglichen ersten Vielzahl von N Informationsströmen empfängt,

Einsetzen eines Sendeleistungsausgleichs, um die räumliche Kanaldiversität zu erhöhen,

wobei ein maximaler Autokorrelationskoeffizient einer räumlichen Kovarianzmatrix als eine Angabe eines Sendeleistungsungleichgewichts (4003, 4005) verwendet wird und

wobei Autokorrelationsschwellenwerte definiert sind, um zwischen leistungsausgeglichenen und -unausgeglichenen Systemen auszuwählen, und diese Schwellenwerte basierend auf bestimmten Leistungskriterien (4006, 4011) erhalten werden und

wobei die Autokorrelation einem Sendeverstärkungswert zugeordnet wird und das System diesen Wert verwendet, um die Hochfrequenzleistung (HF-Leistung) der Transceiver-Stationen (4012) adaptiv einzustellen.

2. System, umfassend Schaltlogik und Programmcode zum Durchführen der Operationen:

Erhalten einer ersten Vielzahl von N Informationsströmen von einem ersten Netzwerk (102),

Umwandeln der ersten Vielzahl von N Informationsströmen in eine zweite Vielzahl von M Bitströmen, wobei jeder der zweiten Vielzahl von M Bitströmen eine Kombination von einigen oder allen der ersten Vielzahl von N Informationsströmen ist,

Senden der zweiten Vielzahl von M Bitströmen an M verteilte Transceiver-Stationen (103) über ein zweites Netzwerk,

wobei die Transceiver-Stationen (103) gleichzeitig die zweite Vielzahl von M Bitströmen über drahtlose Verbindungen an mindestens eine Client-Vorrichtung auf eine Weise senden, dass mindestens eine Client-Vorrichtung mindestens einen der ursprünglichen ersten Vielzahl von N Informationsströmen empfängt,

Einsetzen eines Sendeleistungsausgleichs, um die räumliche Kanaldiversität zu erhöhen,

wobei ein maximaler Autokorrelationskoeffizient einer räumlichen Kovarianzmatrix als eine Angabe eines Sendeleistungsungleichgewichts (4003, 4005) verwendet wird und

wobei Autokorrelationsschwellenwerte definiert sind, um zwischen leistungsausgeglichenen und -unausgeglichenen Systemen auszuwählen, und diese Schwellenwerte basierend auf bestimmten Leistungskriterien (4006, 4011) erhalten werden und

wobei die Autokorrelation einem Sendeverstärkungswert zugeordnet wird und das System diesen Wert verwendet, um die Hochfrequenzleistung (HF-Leistung) der Transceiver-Stationen (4012) adaptiv einzustellen.

3. Verfahren nach Anspruch 1 oder System nach Anspruch 2, wobei Sendeantennenauswahl, Benutzerauswahl und/oder Sendeleistungsausgleich eingesetzt werden.

4. Verfahren oder System nach Anspruch 3, wobei ein Raumselektivitätsindikator (SSI) und/oder ein Zeitselektivitätsindikator (TSI) als Maße der Kanaldiversität verwendet werden,

wobei ein minimaler Singulärwert der effektiven Kanalmatrix jeder Client-Vorrichtung oder ein minimaler Singulärwert oder die Bedingungsnummer der zusammengesetzten Kanalmatrix von allen Client-Vorrichtungen als SSI verwendet wird und/oder

wobei ein Absolutwert der Summe der komplexen Kanalverstärkung von einigen oder allen Transceiver-Stationen (103) als TSI verwendet wird

5. Verfahren oder System nach Anspruch 4, ferner umfassend ein Definieren unterschiedlicher Teilsätze von Sendeantennen und den Teilsatz auswählt, der den SSI zur Sendung über die drahtlosen Verbindungen optimiert.

6. Verfahren oder System nach Anspruch 4, wobei das Auswahlkriterium auf SSI- und/oder TSI-Schwellenwerten basiert, die aus Messungen abgeleitet sind.

7. Verfahren oder System nach Anspruch 4, wobei der SSI verwendet wird, um eine Vielzahl von Kohärenzbereichen zu messen und vorherzusagen.

8. Verfahren oder System nach Anspruch 4, wobei ein durchschnittlicher SSI verwendet wird, um adaptiv zwischen einer festen Sendeantennenkonfiguration und Sendeantennenauswahlsystemen basierend auf den sich ändernden Kanalbedingungen auszuwählen.

9. Verfahren oder System nach Anspruch 4, wobei die zeitliche Korrelation des SSI ausgenutzt wird, um den optimalen Antennenteilsatz auszuwählen, während die Rechenkomplexität des Systems reduziert wird.

10. Verfahren oder System nach Anspruch 5, wobei das Suchen nach dem optimalen Antennenteilsatz ausgesetzt wird, sobald der erste Teilsatz gefunden wird, der den SSI-Schwellenwert erfüllt, wodurch die Rechenkomplexität reduziert wird.

11. Verfahren oder System nach Anspruch 5, wobei nur eine begrenzte Anzahl von Antennenteilsätzen basierend auf einem bestimmten Leistungskriterium als Mittel zum Reduzieren der Rechenkomplexität des Systems ausgewählt wird.

12. Verfahren oder System nach Anspruch 3, wobei eine der Transceiver-Stationen, die eine höhere Leistung als die anderen Transceiver-Stationen aufweist, ihre Sendeleistung reduziert, um die Leistung von allen Transceiver-Stationen an die Clients auszugleichen, oder
wobei eine der Transceiver-Stationen, die eine höhere Leistung als die anderen Transceiver-Stationen aufweist, ihren Leistungspegel unverändert hält und die anderen Transceiver-Stationen ihre Sendeleistung erhöhen, um die Leistung von allen Transceiver-Stationen an die Clients auszugleichen.

13. Verfahren nach Anspruch 1 oder System nach Anspruch 2, wobei das Leistungskriterium die Symbolfehlerrate (SER) ist und/oder die Auswahl zwischen leistungsausgeglichenen und -unausgeglichenen Systemen auf einer Hystereseschleife basiert und mehrere Autokorrelationsschwellenwerte für diese Hysterese definiert sind.


**Revendications**

1. Procédé implémenté au sein d'un système comprenant un système de circuit et un code de programme pour mettre en œuvre les opérations consistant à :

obtenir une première pluralité de N flux d'informations depuis un premier réseau (102),
transformer la première pluralité de N flux d'informations en une deuxième pluralité de M flux de bits, chacun parmi la deuxième pluralité de M flux de bits étant une combinaison de certains ou de la totalité de la première pluralité de N flux d'informations,
envoyer la deuxième pluralité de M flux de bits vers M stations d'émetteur-récepteur réparties (103) sur un deuxième réseau,
avoir les stations d'émetteur-récepteur (103) qui envoient simultanément la deuxième pluralité de M flux de bits sur des liaisons sans fil vers au moins un dispositif client d'une façon selon laquelle au moins un dispositif client reçoit au moins l'un parmi la première pluralité originale de N flux d'informations,
employer un équilibrage de puissance de transmission pour renforcer la diversité spatiale de canal,
dans lequel un coefficient d'autocorrélation maximale d'une matrice de covariance spatiale est utilisé en tant qu'indication de déséquilibre de puissance de transmission (4003, 4005) et,
dans lequel des seuils d'autocorrélation sont définis pour sélectionner entre des systèmes équilibrés et déséquilibrés en puissance et ces seuils sont obtenus sur la base d'un certain critère de performance (4006, 4011) et,
dans lequel l'autocorrélation est mappée dans une valeur de gain de transmission et le système utilise cette valeur pour ajuster de manière adaptative la puissance de radiofréquence (RF) des stations d'émetteur-récepteur (4012).

2. Système comprenant un système de circuit et un code de programme pour mettre en œuvre les opérations consistant à :

obtenir une première pluralité de N flux d'informations depuis un premier réseau (102),
transformer la première pluralité de N flux d'informations en une deuxième pluralité de M flux de bits, chacun parmi la deuxième pluralité de M flux de bits étant une combinaison de certains ou de la totalité de la première pluralité de N flux d'informations,
envoyer la deuxième pluralité de M flux de bits vers M stations d'émetteur-récepteur réparties (103) sur un deuxième réseau,

avoir les stations d'émetteur-récepteur (103) qui envoient simultanément la deuxième pluralité de M flux de bits sur des liaisons sans fil vers au moins un dispositif client d'une façon selon laquelle au moins un dispositif client reçoit au moins l'un parmi la première pluralité originale de N flux d'informations,

employer un équilibrage de puissance de transmission pour renforcer la diversité spatiale de canal,

dans lequel un coefficient d'autocorrélation maximale d'une matrice de covariance spatiale est utilisé en tant qu'indication de déséquilibre de puissance de transmission (4003, 4005) et,

dans lequel des seuils d'autocorrélation sont définis pour sélectionner entre des systèmes équilibrés et déséquilibrés en puissance et ces seuils sont obtenus sur la base d'un certain critère de performance (4006, 4011) et,

dans lequel l'autocorrélation est mappée dans une valeur de gain de transmission et le système utilise cette valeur pour ajuster de manière adaptative la puissance de radiofréquence (RF) des stations d'émetteur-récepteur (4012).

3. Procédé selon la revendication 1 ou système selon la revendication 2 dans lequel une sélection d'antennes de transmission, une sélection d'utilisateurs et/ou un équilibrage de puissance de transmission sont employés.

4. Procédé ou système selon la revendication 3 dans lequel un indicateur de sélectivité d'espace (SSI) et/ou un indicateur de sélectivité de temps (TSI) sont utilisés en tant que mesures de la diversité de canal,

dans lequel une valeur singulière minimale de la matrice de canal effective de chaque dispositif client ou une valeur singulière minimale ou le numéro de condition de la matrice de canal composite provenant de tous les dispositifs clients est utilisée en tant que SSI et/ou

dans lequel une valeur absolue de la somme du gain de canal complexe provenant de certaines ou de la totalité de stations d'émetteur-récepteur (103) est utilisée en tant que TSI

5. Procédé ou système selon la revendication 4 comprenant en outre la définition de différents sous-ensembles d'antennes de transmission et la sélection du sous-ensemble qui optimise le SSI pour une transmission sur les liaisons sans fil.

6. Procédé ou système selon la revendication 4 dans lequel le critère de sélection est basé sur des seuils de SSI et/ou de TSI dérivés de mesures.

7. Procédé ou système selon la revendication 4 dans lequel le SSI est utilisé pour mesurer et prédire une pluralité de zones de cohérence.

8. Procédé ou système selon la revendication 4 dans lequel un SSI moyen est utilisé pour sélectionner de manière adaptative entre une configuration d'antennes de transmission fixe et des systèmes de sélections d'antennes de transmission sur la base des conditions de canal changeantes.

9. Procédé ou système selon la revendication 4 dans lequel une corrélation temporelle du SSI est exploitée pour sélectionner le sous-ensemble d'antennes optimal tout en réduisant la complexité de calcul du système.

10. Procédé ou système selon la revendication 5 dans lequel la recherche du sous-ensemble d'antennes optimal est suspendue dès que le premier sous-ensemble qui respecte le seuil de SSI est trouvé, ce qui réduit la complexité de calcul.

11. Procédé ou système selon la revendication 5 dans lequel seul un nombre limité de sous-ensembles d'antennes sont sélectionnés sur la base d'un certain critère de performance en tant que moyen pour réduire la complexité de calcul du système.

12. Procédé ou système selon la revendication 3 dans lequel une des stations d'émetteur-récepteur qui dépasse en puissance les autres stations d'émetteur-récepteur réduit sa puissance de transmission pour équilibrer la puissance de toutes les stations d'émetteur-récepteur vers les clients, ou

dans lequel une des stations d'émetteur-récepteur qui dépasse en puissance les autres stations d'émetteur-récepteur garde son niveau de puissance inchangé, les autres stations d'émetteur-récepteur augmentent leur puissance de transmission pour équilibrer la puissance de toutes les stations d'émetteur-récepteur vers les clients.

13. Procédé selon la revendication 1 ou système selon la revendication 2 dans lequel le critère de performance est le taux d'erreur de symbole (SER), et/ou la sélection entre des systèmes équilibrés et déséquilibrés en puissance est basée sur une boucle d'hystérésis et de multiples seuils d'autocorrélation sont définis pour cette hystérésis.

Network
Content

C1

C2

C3

C4

C5

N

Precoding
Transformation
Unit
101

M

Network
102

M

103

UE 1

UE 2

UE 3

UE 4

*Fig. 1*

Fig. 2

Fig. 3

22

Fig. 4

EP 2 850 796 B1

- **i.i.d. channel model** *(low TX-spatial correlation, low power imbalance)*

$$\rho_c = 0.00001, \rho_a = 1$$

$$
\begin{matrix}
1.0000 & 0.0000 & 0.0000 & 0.0000 & 0.0000 & 0.0000 \\
0.0000 & 1.6667 & 0.0000 & 0.0000 & 0.0000 & 0.0000 \\
0.0000 & 0.0000 & 1.3333 & 0.0000 & 0.0000 & 0.0000 \\
0.0000 & 0.0000 & 0.0000 & 1.0000 & 0.0000 & 0.0000 \\
0.0000 & 0.0000 & 0.0000 & 0.0000 & 0.6667 & 0.0000 \\
0.0000 & 0.0000 & 0.0000 & 0.0000 & 0.0000 & 0.3333
\end{matrix}
$$

- **High cross-correlation** *(high TX-spatial correlation, low power imbalance)*

$$\rho_c = 0.8, \rho_a = 1$$

$$
\begin{matrix}
1.0000 & 0.8000 & 0.6400 & 0.5120 & 0.4096 & 0.3277 \\
0.8000 & 1.6667 & 0.8000 & 0.6400 & 0.5120 & 0.4096 \\
0.6400 & 0.8000 & 1.3333 & 0.8000 & 0.6400 & 0.5120 \\
0.5120 & 0.6400 & 0.8000 & 1.0000 & 0.8000 & 0.6400 \\
0.4096 & 0.5120 & 0.6400 & 0.8000 & 0.6667 & 0.8000 \\
0.3277 & 0.4096 & 0.5120 & 0.6400 & 0.8000 & 0.3333
\end{matrix}
$$

- **High auto-correlation** *(low TX-spatial correlation, high power imbalance)*

$$\rho_c = 0.00001, \rho_a = 5.9$$

$$
\begin{matrix}
5.9000 & 0.0000 & 0.0000 & 0.0000 & 0.0000 & 0.0000 \\
0.0000 & 0.0333 & 0.0000 & 0.0000 & 0.0000 & 0.0000 \\
0.0000 & 0.0000 & 0.0267 & 0.0000 & 0.0000 & 0.0000 \\
0.0000 & 0.0000 & 0.0000 & 0.0200 & 0.0000 & 0.0000 \\
0.0000 & 0.0000 & 0.0000 & 0.0000 & 0.0133 & 0.0000 \\
0.0000 & 0.0000 & 0.0000 & 0.0000 & 0.0000 & 0.0067
\end{matrix}
$$

*Fig. 5*

Fig. 6

Fig. 7

Fig. 8

a) i.i.d.

b) High cross-correlation

c) High auto-correlation

Fig. 9

*Fig. 10*

*Fig. 11*

*Fig. 12*

EP 2 850 796 B1

Fig. 13

EP 2 850 796 B1

*Fig. 14*

Fig. 15

Fig. 16

Fig. 17

Fig. 18

EP 2 850 796 B1

Fig. 19

Fig. 20

Fig. 21

| DIDO order | 4x4 | 5x4 | 6x4 |
|---|---|---|---|
| $D_{dB}$ | -5 | -1.5 | 0.3 |
| SNR [dB] (SER=1%) | 19.7 | 11.1 | 8.0 |
| SNR [dB] (SER=0.1%) | 30 | 16.3 | 11.8 |

a)

b)

Fig. 22

Fig. 23

Fig. 24

## 2x UEs case with different numbers of antenna sets

*Fig. 25*

• 4x UEs case with different numbers of antenna sets

Fig. 26

Fig. 27

- 8x UEs case with different numbers of antenna sets

*Fig. 28*

*Fig. 29*

a) DIDO 4x4

b) DIDO 6x4

*Fig. 30*

a) DIDO 2x2

b) DIDO 4x2

*Fig. 31*

Fig. 32

*Fig. 33*

Fig. 34

*Fig. 35*

Fig. 36

Fig. 37

| Thresholds | 2x2 | 4x4 | 6x6 |
|---|---|---|---|
| MAX_AUTO_CORR | 1.4 | 1.7 | 2.0 |
| MIN_AUTO_CORR | 1.7 | 2.6 | 3.0 |

*Fig. 38*

- Minimum singular value

*Fig. 39*

Fig. 40

```
                        ┌──────────┐
                        │  Start   │
                        └──────────┘
                             │
                             ▼
                    ┌─────────────────┐
                    │    Set K = 0    │   4101
                    └─────────────────┘
                             │
                             ▼
                          4102
                         ╱──────╲
         ┌──────────────╱        ╲──────────  No
         │              ╲ K < Number of BTSs ╲
         │               ╲────────╱         │
         │                   │ Yes          │
         │                   ▼              │
         │        ┌────────────────────────────────────┐
         │        │   4103                             │
         │        │ Set autoCorr = auto correlation number for BTS K
         └────────│ Set txGain for BTS K = (MAX_TX_GAIN - MIN_TX_GAIN)
                  │ (1 - autoCorr/nTX) + MIN_TX_GAIN Increment K
                  └────────────────────────────────────┘
                                                        │
                                                        ▼
                                                 ┌──────────┐
                                                 │ Finished │
                                                 └──────────┘
```

*Fig. 41*

EP 2 850 796 B1

*Fig. 42*

## Scenario 1: Condition Number

Fig. 43

Scenario 1: DIDO 2x2 without TX Balancing

Fig. 44

Scenario 1: DIDO 2x2 with TX Balancing

Fig. 45

EP 2 850 796 B1

64

Scenario 1: DIDO 4x2 with TX Balancing

Fig. 46

EP 2 850 796 B1

Fig. 47

Scenario 2: Condition Number

Fig. 48

67

Scenario 2: DIDO 2x2 without TX Balancing

Fig. 49

EP 2 850 796 B1

Scenario 2: DIDO 2x2 with TX Balancing

Fig. 50

EP 2 850 796 B1

## Scenario 2: DIDO 4x2 with TX Balancing

*Fig. 51*

EP 2 850 796 B1

Antenna Selection with TX Power Imbalance

Fig. 52

Antenna Selection with TX Power Imbalance

$4\times4, \rho_a = 1$

$6\times4, \rho_a = 1$

$6\times4, \rho_a = 5.9$

$5\times4, \rho_a = 5.9$

*Fig. 53*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 464648
- US 917257
- US 802988
- US 8170081 B
- US 802974
- US 802989
- US 802958
- US 802975
- US 802938
- US 630627
- US 7599420 B
- US 7633994 B
- US 7636381 B
- US 8160121 B
- US 256478
- US 7711030 B
- US 7418053 B
- US 817731
- US 7885354 B
- US 2011003608 A1
- WO 7599420 A
- WO 7633994 A
- WO 7636381 A
- WO 12143503 A

### Non-patent literature cited in the description

- **R. A. MONZIANO ; T. W. MILLER.** Introduction to Adaptive Arrays. Wiley, 1980
- **K. K. WONG ; R. D. MURCH ; K. B. LETAIEF.** A joint channel diagonalization for multiuser MIMO antenna systems. *IEEE Trans. Wireless Comm,* July 2003, vol. 2, 773-786
- **M. COSTA.** Writing on dirty paper. *IEEE Transactions on Information Theory,* May 1983, vol. 29 (3), 439-441
- **U. EREZ ; S. SHAMAI (SHITZ ; R. ZAMIR.** Capacity and lattice-strategies for cancelling known interference. *Proceedings of International Symposium on Information Theory,* November 2000
- **G. CAIRE ; S. SHAMAI.** On the achievable throughput of a multiantenna Gaussian broadcast channel. *IEEE Trans. Info.Th.,* July 2003, vol. 49, 1691-1706
- **M. TOMLINSON.** New automatic equalizer employing modulo arithmetic. *Electronics Letters,* March 1971, 138-139
- **H. MIYAKAWA ; H. HARASHIMA.** A method of code conversion for digital communication channels with intersymbol interference. *Transactions of the Institute of Electronic*
- **D.-S. SHIU ; G. J. FOSCHINI ; M. J. GANS ; J. M. KAHN.** Fading correlation and its effect on the capacity of multielement antenna systems. *IEEE Trans. Comm.,* March 2000, vol. 48 (3), 502-513
- **J. P. KERMOAL ; L. SCHUMACHER ; K. I. PEDERSEN ; P. E. MOGENSEN ; F. FREDERIKSEN.** A stochastic MIMO radio channel model with experimental validation. *IEEE Jour. Select. Areas in Comm,* August 2002, vol. 20 (6), 1211-1226
- **R. CHEN ; R. W. HEATH, JR. ; J. G. ANDREWS.** Transmit Selection Diversity for Unitary Precoded Multiuser Spatial Multiplexing Systems with Linear Receivers. *IEEE Trans. on Signal Processing,* March 2007, vol. 55 (3), 1159-1171